(19)

Europäisches Patentamt

European Patent Office

Office européen des brevets

(11) **EP 2 291 457 B1**

(12) **EUROPÄISCHE PATENTSCHRIFT**

(45) Veröffentlichungstag und Bekanntmachung des Hinweises auf die Patenterteilung:
**05.04.2017 Patentblatt 2017/14**

(21) Anmeldenummer: **09769172.9**

(22) Anmeldetag: **18.06.2009**

(51) Int Cl.:
*C08L 77/06* (2006.01)     *C08G 69/26* (2006.01)

(86) Internationale Anmeldenummer:
**PCT/EP2009/057584**

(87) Internationale Veröffentlichungsnummer:
**WO 2009/156323 (30.12.2009 Gazette 2009/53)**

(54) **POLYAMIDFORMMASSEN, ENTHALTEND TEILKRISTALLINE, TRANSPARENTE COPOLYAMIDE, ZUR HERSTELLUNG VON TRANSPARENTEN FORMTEILEN MIT HOHER FLEXIBILITÄT, HOHER KERBSCHLAGZÄHIGKEIT, NIEDRIGER WASSERAUFNAHME UND AUSGEZEICHNETER CHEMIKALIENBESTÄNDIGKEIT**

POLYAMIDE MOULDED MASSES CONTAINING SEMI-CRYSTALLINE TRANSPARENT COPOLYAMIDES FOR PRODUCING HIGHLY FLEXIBLE TRANSPARENT MOULDED PARTS WITH HIGH NOTCH-IMPACT STRENGTH, LOW WATER ABSORBENCY AND EXCELLENT RESISTANCE TO CHEMICALS

MATIÈRES À MOULER À BASE DE COPOLYAMIDES TRANSPARENTS SEMI-CRISTALLINS PERMETTANT LA FABRICATION DE PIÈCES MOULÉES TRANSPARENTES ET PRÉSENTANT UNE HAUTE FLEXIBILITÉ, UNE HAUTE RÉSISTANCE AU CHOC ENTAILLÉ, UNE FAIBLE ABSORPTION D'EAU AINSI QU'UNE EXCELLENTE RÉSISTANCE CHIMIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **26.06.2008 EP 08011622**

(43) Veröffentlichungstag der Anmeldung:
**09.03.2011 Patentblatt 2011/10**

(73) Patentinhaber: **EMS-PATENT AG**
**7013 Domat / Ems (CH)**

(72) Erfinder:
• **BÜHLER, Friedrich, Severin**
**CH-7430 Thusis (CH)**

• **HALA, Ralf**
**88161 Lindenberg (DE)**
• **BASS, Sepp**
**CH-7013 Domat/EMS (CH)**

(74) Vertreter: **Bremi, Tobias Hans et al**
**Isler & Pedrazzini AG**
**Gotthardstrasse 53**
**Postfach 1772**
**8027 Zürich (CH)**

(56) Entgegenhaltungen:
**EP-A2- 0 012 931     WO-A1-98/40428**
**DE-A1- 4 310 970**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Technisches Gebiet

Die Erfindung betrifft transparente, schlagzähe und flexible Polyamidformmassen mit niedriger Wasseraufnahme und ausgezeichneter Chemikalienbeständigkeit, d. h. hoher Beständigkeit gegenüber Alkoholen, auf Basis von teilkristallinen, aber gleichzeitig transparenten Copolyamiden. Die in der Formmasse enthaltenen Copolyamide sind immer aus mindestens zwei unterschiedlichen Diaminen, einem cycloaliphatischen und einem linear und/oder verzweigtkettigen aliphatischen Diamin mit 9 bis 14 Kohlenstoffatomen, sowie aliphatischen Dicarbonsäuren aufgebaut. Die Größe der Kristallite ist aber kleiner als die Wellenlänge des sichtbaren Lichtes, so dass diese teilkristallinen Copolyamide transparent sind. Die transparenten Copolyamide sind bevorzugt aus Monomeren auf Basis nachwachsender Rohstoffe hergestellt. Der sogenannte Bioanteil beträgt hierbei mindestens 70%.

Der oben erwähnte Bioanteil nach ASTM D6866-06a ist das Maß für den Anteil an nichtfossilem, d. h. nachwachsendem Kohlenstoff. Der Bioanteil wird dabei aus dem Verhältnis der Kohlenstoffisotope $C_{12}$ und $C_{14}$ abgeleitet. Da sich dieses Verhältnis bei fossilen und nachwachsenden Rohstoffen deutlich unterscheidet, kann der Bioanteil an den erfindungsgemäßen Polyamidformmassen messtechnisch einfach als eindeutig produkteharakterisierende Eigenschaft nachgewiesen werden.

Anwender, die Polyamidformmassen zu z.B. Formteilen weiterverarbeiten und die sich z.B. nach der Normengruppe ISO 14000 zertifizieren lassen wollen, verpflichten sich zum nachhaltigen Wirtschaften. Sie erstellen beispielsweise Lebenszyklusanalysen (Life cycle assessment, LCA) über die $CO_2$-Bilanz von Produkten. Dazu trägt eine kurze Zeitspanne zwischen Freisetzung von $CO_2$ (Quelle) und erneute Immobilisierung (Senke) bei, wie sie durch die erfindungsgemäße Verwendung biologisch nachwachsender Rohstoffe mit den angegebenen Werten für den Bioanteil möglich ist. Der Fachmann steht somit vor dem Problem, ökologisch vorteilhafte Werkstoffe einsetzen zu müssen, die bisher mit nachteiligen Werkstoffeigenschaften verbunden waren. Die Erfindung stellt in einer Ausführungsform insofern eine Lehre zur Überwindung dieses Problems dar, da sie also überraschenderweise ein unerwartet hochwertiges transparentes Copolyamid als Werkstoff zur Verfügung stellt, welches dennoch ökologisch im wesentlichen unbedenklich ist, weil es weitgehend aus nachwachsenden oder erneuerbaren Rohstoffen aufgebaut ist.

Die vorliegende Erfindung betrifft ebenfalls ein Verfahren zur Herstellung der oben genannten Polyamidformmassen auf Basis von teilkristallinen, transparenten Copolyamiden, sowie aus den Formmassen hergestellte Formteile, wie z.B. Produkte für Anwendungen im Bereich von Sportgeräten, Sportschuhen, im Bereich von Sportausrüstungsgegenständen wie Schischuhen, Schibindungen, Helmen, oder aber auch hochwertige Formteile wie Gehäuse- und Displaymaterial für Mobiltelefone, GPS-Geräte, MP3-Player, Brillen, Linsen, Kameras, optische Geräte und Ferngläser.

Hochwertige Oberflächen werden als Unterstützung einer "High End Quality" Positionierung von Autoausstattungen, Haushaltsgeräten, Unterhaltungselektronik, Sportgeräten und leicht zu reinigenden Industrie-Oberflächen eingesetzt. Dazu werden hohe Ansprüche an den Werkstoff gestellt, der neben dem hochwertigen Aussehen bruchsicher, fließfähig, dehnfähig und verzugsarm sein muss. Das erfordert geringe Volumenänderungen durch Kristallisation und geringe Feuchte-Aufnahme. Ferner wird eine ausgezeichnete Abriebfestigkeit und dynamische Belastbarkeit verlangt, was typische Eigenschaften von dehnfähigen Polyamiden sind. Formteile aus den erfindungsgemäßen Polyamidformmassen besitzen daher eine ausgezeichnete Transparenz, Zähigkeit und Abriebfestigkeit. Hohe chemische Resistenz und hohe Belastbarkeit bei Wechselbiegebeanspruchung erlauben diesen Formteilen Einsätze in robuster Umgebung.

Die erfindungsgemäßen Formmassen können auf bekannten Verarbeitungsanlagen nach bekannten Verfahren zu den erwähnten hochwertigen Formteilen verarbeitet werden.

Stand der Technik

Die Ausgangsverbindungen bzw. Monomere für Kunststoffe werden heute im allgemeinen noch aus fossilen Quellen (Erdöl) gewonnen. Allerdings sind diese Ressourcen begrenzt, so dass Ersatzstoffe gesucht werden. Daher steigt das Interesse an nachwachsenden Rohstoffen, die zur Herstellung von "Biokunststoffen" oder Kunststoffen mit einem hohen Bioanteil verwendet werden können. Durch den chemischen Prozess des Crackens und die erneute Polymerisation ist man heute in der Lage, Molekülketten herzustellen, die vergleichbare Eigenschaften besitzen können, wie jene auf Erdölbasis. Mögliche Ausgangspflanzen sind z. B. Pflanzen; die Pflanzenöle wie z. B. Rizinusöl, Tallölfettsäuren sowie Öl-, Linol- oder Linolensäure produzieren. Erucasäure wird z. B. aus den Samen von Raps, Senf, Goldlack oder Kresse gewonnen.

Aufgrund der vor allem weltweit steigenden Erdölpreise und des Energiehungers, aber auch aufgrund der politischen Instabilität in den Förderländern, werden daher nachwachsende Rohstoffe auch für die Kunststoffbranche zu einer echten Alternative.

Aufgrund ihrer positiven Eigenschaften stellen Biokunststoffe in vielen Bereichen eine echte Alternative zu herkömmlichen, fossilen Kunststoffen dar. Polyamide mit Bioanteilen über 50% sind daher denkbar. Es handelt sich aber dann um teilkristalline Polyamide, die nicht transparent sind. Heutzutage werden zwar immer noch typische Vertreter von teilkristallinen Polyamiden wie Polyamid 6, Polyamid 11, Polyamid 66, Polyamid 69, Polyamid 610 etc. aus erdölbasierenden Monomeren hergestellt. Theoretisch ist es möglich, hier einen Bioanteil von nahezu 100% zu erzielen.

Unabhängig von der Rohstoffbasis müssen die transparenten Polyamidformmassen aber dennoch die hohen Anforderungen der Kunden erfüllen, d. h. neben sehr guten optischen

Eigenschaften müssen die mechanischen Eigenschaften und die Chemikalienbeständigkeit auf hohem Niveau liegen.

Einige Patentdokumente beschreiben amorphe, transparente oder teilkristalline transparente Polyamidformmassen, geeignet zur Herstellung von hochwertigen Formteilen mit ausgezeichneten Oberflächen. Die Einstellung vorteilhafter Eigenschaften wie Zähigkeit, chemische Resistenz, Wechselbiegefestigkeit etc sind beschrieben.

Zahlreiche Monomere stehen zum Aufbau solcher Polyamide oder Copolyamide zur Verfügung. Transparente Polyamide oder Copolyamide zur Herstellung von transparenten Formteilen können amorph oder teilkristallin hergestellt werden. Die Glastemperaturen werden in der Regel deutlich über 80°C eingestellt, um Produkte mit ausreichender Wärmeformbeständigkeit zu erhalten. Die Steifigkeit, angegeben als Zug-E-Modul, liegt über 1500 MPa. Die Kerbschlagzähigkeiten nach Charpy bei 23°C liegen deutlich unter 15 kJ/m$^2$.

Zur Modifizierung der Eigenschaften dieser transparenten Polyamide oder Copolyamide werden daher häufig Blends mit anderen Polyamiden und/oder weiteren Additiven oder Verstärkungsstoffen hergestellt.

Teilkristalline, transparente Polyamidformmassen mit ausgezeichneter chemischer Beständigkeit, insbesondere gegenüber Alkoholen, die aus PACM (Bis-(4-aminocyclohexyl)-methan) mit 35 - 60 mol% trans,trans-Isomeren des Bis-(4-aminocyclohexyl)-methans, 65-40 mol% anderer Diamine und Dodecandisäure hergestellt sind, sind aus DE 43 10 970 bekannt. Nachteilig ist die Glasübergangstemperatur (Tg) von 140°C und die mittlere Steifigkeit, aufgrund dessen sich diese teilkristallinen Polyamide wie die üblichen amorphen transparenten Polyamide eher schwierig verarbeiten lassen und deren Eigenschaften haben. Die dynamische Belastbarkeit liegt für diese Polyamidtypen, für definierte Anfangsbiegespannungen bei mittleren Schwingspielzahlen.

EP 0012931 A2 beschreibt Copolyamide, die man durch Polykondensation von aliphatischen und/oder aromatischen Dicarbonsäuren und einem Amingemisch erhält, das sich aus

Diaminodicyclohexylmethanen, gegebenenfalls homologen Polycyclopolyaminen und gegebenenfalls weiteren aliphatischen und cycloaliphatischen Diaminen zusammensetzt. Gemäß Beispiel 3 beträgt die Konzentration an Hexamethylendiamin 69 Mol% und die des cycloaliphatischen Diamins, d.h. des Gemisches an PACM-Stellungsisomeren 31 Mol-%, bezogen auf die Gesamtmenge an Diaminen. Der Gehalt an 2,4'-Diaminodicyclohexylmethan im Amingemisch beträgt 5 Gew.-%. In EP 0012931 A2 finden sich keine Aussagen über Kristallinität, Glasübergangstemperatur, Schmelztemperatur und Schmelzenthalpie der hergestellten Produkte.

DE 43 10 970 A1 beschreibt Polyamidformmassen auf Basis von Polyamiden, welche aus aliphatischen Dicarbonsäuren, 35-60 Mol-% trans,trans-Bis-(4-aminocyclohexyl)-methan und 65-40 Mol-% anderen aliphatischen, cycloaliphatischen, araliphatischen oder aromatischen Diaminen aufgebaut sind. Die Rezepturen der DE 43 10 970 enthalten aber ausschließlich cycloaliphatische Diamine. Das verwendete PACM ist jeweils nur ein PACM-cis,trans-Isomeren-Gemisch.

WO 98/40428 beschreibt Copolyamide, welche mindestens ein cycloaliphatisches Diamin neben einem aliphatischen Diamin und mindestens eine cycloaliphatische Dicarbonsäure neben mindestens einer aliphatischen Dicarbonsäure enthalten. Die Beispiele offenbaren allerdings nur 1,4-Cyclohexyldicarbonsäure (CHDA) als cycloaliphatische Komponente der Copolyamide; aliphatische Diamine kommen nicht zum Einsatz.

Weiterhin sind aus EP-A-0 725 101 amorphe, transparente Polyamidformmassen mit hoher chemischer und thermischer Beständigkeit und ausgezeichneter dynamischer Belastbarkeit gegenüber Dauerschwingbelastung bekannt, die aus MACM (Bis-(4-amino-3-methylcyclohexyl)-methan) und Dodecandisäure aufgebaut werden. Gegenüber den teilkristallinen transparenten Polyamiden ist die Beständigkeit gegenüber Alkoholen deutlich geringer. Die Glasübergangstemperatur liegt bei 155°C, die Kerbschlagzähigkeit, insbesondere bei Temperaturen unter 0°C, liegt unter 10 kJ/m$^2$. Der Zug-E-Modul liegt mit 1600 MPa im Bereich mittlerer Steifigkeit. Die dynamische Belastbarkeit liegt für diese Polyamidtypen für definierte Anfangsbiegespannungen bei hohen Schwingspielzahlen.

Amorphe, transparente Polyamidformmassen mit mindestens einem zweiten Homopolyamid, die neben den in der EP-A-0 725 101 beschriebenen Eigenschaften, eine hervorragende dynamische Belastbarkeit zeigen und zur Herstellung von Formkörpern für optische oder elektrooptische Anwendungen wie beispielsweise Linsen für Sonnenbrillen und Lichtwellenleiter geeignet sind, werden in DE 196 42 885 C2 beschrieben.

Die in DE 3 717 928 C2 beschriebenen transparenten Copolyamide sind dadurch charakterisiert, dass in den Diaminmischungen immer ein Isomerengemisch mit mindestens 80% trans,trans und oder cis,trans Bis-(4-amino-3-methyl-5-ethyl-cyclohexyl)-methan enthalten sein muss. Damit kann die hohe Resistenz gegen Alkohole nicht erreicht werden. Die beschriebenen Polyamide sind amorph, weisen einen Tg von deutlich über 100°C und Zug-E-Moduli von 2000 MPa und höher auf. Sie ergeben darüber hinaus steife Produkte, die tiefe Kerbschlagzähigkeiten aufweisen.

Gegenstand der EP 628 602 B2 sind Polyamidblends, bestehend aus einem teilkristallinen Polyamid und einer ausreichenden Menge an amorphem Polyamid, wobei das Mischen in der Schmelze im Extruder oberhalb 300°C durchgeführt wird. Damit soll in teilkriställinen Polyamiden, die niedrige Glasumwandlungstemperaturen (Tg) aufweisen, die Wärmeformbeständigkeit durch Zugabe von amorphen Polyamiden mit hohem Tg verbessert werden.

Der Nachteil von solchen Polyamidblends gemäß EP 628 602 B2 besteht in der Neigung zum Entmischen und zur Eintrübung bei thermischer Belastung. Je nach Schneckenaufbau des Extruders bei der Compoundierung werden unterschiedlich gut durchmischte Materialien erhalten, die Schwankungen in den Eigenschaften verursachen. Durch einen zusätzlichen Extrusionsprozess nach dem Polymerisationsprozess wird das Polymerblend zweimal mit hohen Temperaturen belastet, wodurch die Qualität (Farbe, Reinheit, Transparenz) verschlechtert wird.

EP 1 847 569 A1 beschreibt transparente, zähe Polyamidformmassen, hergestellt als Compound aus amorphen transparenten Polyamiden und elastomeren Polyesteramiden. Die amorphen transparenten Polyamide bestehen aus cycloaliphatischen Monomeren und langkettigen aliphatischen Monomeren. Diese amorphen transparenten Polyamide zeigen Glastemperaturen deutlich über 100°C und Zug-E-Moduli von über 1500 MPa. Aus diesen Formmassen entstehen transparente, zähe Produkte, jedoch mit eingeschränkter chemischer Resistenz, d. h. gegenüber Alkoholen, und eingeschränkter Flexibilität. Darüber hinaus besteht bei den hier beschriebenen Polyamidblends aber die Gefahr einer Entmischung der Komponenten und der Verminderung der Qualität bei der Transparenz, der Farbe und der Reinheit.

Teilkristalline Polyamide wie Polyamid 11 oder Polyamid 12 besitzen eine ausgezeichnete chemische Resistenz, eine ausgezeichnete Flexibilität und gute dynamische Belastbarkeit. Diese Polyamide sind aber nicht transparent und erreichen im tiefen Temperaturbereich Kerbschlagzähigkeiten, die 10 KJ/m$^2$ nicht übersteigen. Ferner treten deutliche Eigenschaftsänderungen auf, wenn der Zustand von trocken nach konditioniert wechselt.

WO 2008/006991 A2 beschreibt Polyamid Blends mit Tg > 75°C auf der Basis von 60 - 99 Gew.-% transparentem, amorphem oder kristallinem Polyamid (A) mit Tg > 90°C und 40 - 1 Gew.-% Polyetheramid (B). Damit sind amorphe und teilkristalline Polyamide mit Tg < 80°C, die aber z. B. eine ausgezeichnete Kerbschlagzähigkeit bei tiefen Temperaturen aufweisen können, ausgeschlossen. Es ist auch nicht naheliegend, in einem Bereich mit Tg-Werten der Polyamide von < 80°C zu arbeiten, um transparente Produkte zu erzielen, denn hier weiß der Fachmann, dass eine zunehmende Kristallinität und damit Trübheit zu erwarten ist, wodurch er von einer derartigen Arbeitsweise abgehalten wird.

Darstellung der Erfindung

Der Erfindung liegt daher die Aufgabe zugrunde, Polyamidformmassen auf Basis von transparenten Copolyamiden bereitzustellen, die zur Herstellung von transparenten oder eingefärbten Formteilen mit mittlerer bis hoher Flexibilität, hoher Kerbschlagzähigkeit bei tiefen Temperaturen, ausgezeichneter Transparenz, ausgezeichneter chemischer Resistenz und geringen Eigenschaftsänderungen im konditionierten Zustand eingesetzt werden können. Insbesondere soll es möglich sein, den Werkstoff wesentlich auf nachwachsenden Rohstoffen basieren zu lassen.

Diese Aufgabe wird erfindungsgemäß gelöst durch die Formmassen gemäß Anspruch 1, enthaltend Polyamidformmassen auf Basis von teilkristallinen, aber gleichzeitig transparenten Copolyamiden, die überwiegend auf aliphatischen Monomeren basieren, zur Herstellung von transparenten oder einfärbbaren Formteilen mit hoher Flexibilität, hoher Kerbschlagzähigkeit (Charpy), niedriger Wasseraufnahme und ausgezeichneter Chemikalienbeständigkeit, d. h. hoher Alkoholbeständigkeit, enthaltend 40 bis 100 Gew.-% mindestens eines teilkristallinen, transparenten Copolyamids (A) mit einer Glasübergangstemperatur (Tg) von höchstens 80°C und einer Schmelztemperatur von wenigstens 150°C, sowie einer Schmelzenthalpie von wenigstens 20 J/g, bevorzugt von wenigstens 30 J/g, aufgebaut aus mindestens zwei voneinander verschiedenen Diaminen, ausgewählt aus der Gruppe, bestehend aus linearen und/oder verzweigtkettigen aliphatischen Diaminen mit 9 bis 14 Kohlenstoffatomen und cycloaliphatischen Diaminen, insbesondere mit 6 bis 36 Kohlenstoffatomen, wobei die Konzentration an cycloaliphatischem Diamin 10 bis höchstens 40 Mol-% und die Konzentration an aliphatischem Diamin mindestens 60 Mol-%, jeweils bezogen auf den Gesamtdiamingehalt, beträgt, sowie aus einer oder mehreren aliphatischen Dicarbonsäuren, insbesondere mit 6 bis 36 Kohlenstoffatomen, 0 bis 60 Gew.-% mindestens eines weiteren Polymeren (B), ausgewählt aus der Gruppe, bestehend aus amorphen oder teilkristallinen Homo- oder Copolyamiden, Polyetheresteramiden, Polyetheramiden, Polyesteramiden oder deren Gemischen, 0 bis 10 Gew.-% übliche Additive (C), ausgewählt aus der Gruppe, bestehend aus UV-Stabilisatoren, Hitzestabilisatoren, Radikalfangern und/oder Verarbeitungshilfsstoffen, Einschlussverhinderern, Gleitmitteln, Entformungshilfsstoffen, Weichmachern, funktionellen Additiven zur Beeinflussung der optischen Eigenschaften, insbesondere des Brechungsindexes, Schlagzähmodifikatoren, nanoskaligen Füll- und/oder Zuschlagsstoffen, optischen Aufhellern, Farbstoffen oder Mischungen davon, wobei die Summe der Komponenten (A), (B) und (C) 100 Gew.-% ergibt.

Diese Aufgabe wird weiterhin gelöst durch das Verfahren gemäß Anspruch 12, wobei die Herstellung der Polymerkomponenten (A) und (B) in bekannten Druckgefäßen, mit einer Druckphase bei 230°C bis 300°C mit einer nachfolgenden Entspannung bei 230°C bis 300°C, mit einer nachfolgenden Entgasung bei 240°C bis 300°C sowie Austragen der Polyamidformmassen in Strangform, Abfühlen, Granulieren und Trocknen des Granulats, Compoundieren der Komponenten (A), und gegebenenfalls (B), und gegebenenfalls (C) als Granulat und Formen in einem Extruder bei Massetemperaturen von 200°C bis 330°C zu einem Strang, Schneiden mit geeigneten Granulatoren zu Pellets erfolgt, wobei während der Compoundierung Additive zugegeben werden können, die zur Ausrüstung der Formmasse erwünscht sind, wie Verarbeitungsstabilisatoren, Farbpigmente, UV-Absorber, Hitzestabilisatoren, Flammschutzmittel und andere transparente Polyamide oder Polyamid 12.

Diese Aufgabe wird schließlich gelöst durch die Formteilen gemäß den Ansprüchen 13 bis 17. Die erfindungsgemäßen Formteile sind erhältlich aus den zuvor erwähnten Polyamidformmassen mittels Spritzgießverfahren, Spritzprägeverfahren, Extrusionsverfahren, Blasformverfahren, insbesondere Extrusionsblasformverfahren, Spritzstreckblasverfahren, Tiefziehverfahren, Schmelzespinnverfahren bei Massetemperaturen von 210°C bis 300°C, wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heiße Formteil aufbringt.

In den Unteransprüchen sind vorteilhafte Ausführungsformen der Erfindung enthalten.

Die erfindungsgemäßen Formmassen weisen in einer bevorzugten Ausführungsform einen Anteil an aliphatischen Struktureinheiten von mindestens 70 Gew.-%, bevorzugt von mindestens 75 Gew.-% und besonders bevorzugt von mindestens 80 Gew.-% auf. Hierbei ist der Gewichtsanteil der aliphatischen Struktureinheiten in Komponente A bzw. in den Komponenten A und B, bezogen auf die Gesamtmasse der Komponente A bzw. der Summe der Komponenten A und B, gemeint. Die Masse der aliphatischen Struktureinheit entspricht der Masse des eingesetzten aliphatischen Monomers (z.B. 202.25 g/mol für Sebacinsäure oder 172.32 g/mol für Decandiamin) abzüglich der Masse der bei der Polykondensation entstehenden Spaltprodukte (34 g/mol für Disäuren, 2 g/mol für Diamine).

In einer weiteren bevorzugten Ausführungsform leiten sich die aliphatischen Struktureinheiten in den Komponenten A und/oder B überwiegend oder sogar ausschließlich von Monomeren auf Basis nachwachsender Rohstoffe ab. Somit weisen die erfindungsgemäßen Formmassen einen Bioanteil gemäß ASTM D6866-06 von mindestens 70 Gew.-%, bevorzugt von mindestens 75 Gew.-% und insbesondere von mindestens 80 Gew.-% auf.

Die erfindungsgemäßen Formmassen weisen eine Glasübergangstemperatur von höchstens -80°C und eine Schmelztemperatur von wenigstens 150°C auf. Die Transparenz einer aus der transparenten Formmasse hergestellten Platte mit Dicke von 2mm, gemessen als Lichttransmission gemäß ASTM D1003, beträgt über 85%, insbesondere wenigstens 88%, besonders bevorzugt 90% und der Haze (Trübung) maximal 10%.

Die Erfindung betrifft somit flexible Polyamidformmassen, auf der Basis von transparenten und teilkristallinen Copolyamiden mit einer Glasübergangstemperatur (Tg) von höchstens 80°C, bevorzugt von höchstens 70°C, besonders bevorzugt von höchstens 65°C, und einer Schmelztemperatur von wenigstens 150°C, die zur Herstellung von hoch transparenten oder eingefärbten Formteilen geeignet sind. Die Transparenz wird wie üblich über die Messung der Lichttransmission gemäß ASTM-Norm D 1003 definiert. Somit weisen die erfindungsgemäß eingesetzten Copolyamide (A) bevorzugtermaßen einen Tg im Bereich von 0 bis 75°C und besonders bevorzugt im Bereich von 20 bis 70°C auf. Die Schmelzpunkte liegen bevorzugt im Bereich von 150 bis 250°C und besonders bevorzugt im Bereich von 150 bis 200°C.

Die Schmelzwärme (HM) bzw. die Schmelzenthalpie, bestimmt nach ISO 11357-1/2 der erfindungsgemäßen Copolyamide (A), beträgt wenigstens 20 J/g, bevorzugt wenigstens 30 J/g.

Die teilkristallinen, transparenten Copolyamide (A) zeichnen sich durch eine sehr hohe Charpy Kerbschlagzähigkeit aus (nach ISO 179/KeV), insbesondere bei tiefen Temperaturen unter dem Gefrierpunkt mit einem Wert deutlich über 10 kJ/m$^2$ (bei -30°C).

Produkte, hergestellt aus den erfindungsgemäßen Copolyamiden sind sehr resistent gegen Alkohole und zeigen wenig Beeinträchtigung der Transparenz (Lichttransmission und Haze) nach Behandlung mit Alkoholen. Aufgrund der ausgezeichneten Alkoholbeständigkeit wird der Haze durch Lagerung in verschiedenen Alkoholen (Methanol, Ethanol, Isopropanol oder Spiritus) um weniger als 5% erhöht, bevorzugt um weniger als 3% erhöht und besonders bevorzugt nicht erhöht. Im Zusammenhang mit der vorliegenden Erfindung wird daher die erzielte ausgezeichnete Chemikalienbeständigkeit im Sinne einer ausgezeichneten Alkoholbeständigkeit (als Testparameter) verstanden.

Produkte (z.B. Gehäuse, Brillen, Rohre, Fasern, Folien etc.), hergestellt aus diesen erfindungsgemäßen Copolyamiden zeigen eine hohe Flexibilität, vergleichbar mit derjenigen von Polyamid 12, wobei der Einfluss der Konditionierung bei den erfindungsgemäßen Formmassen wesentlich geringer als in Polyamid 12 ist.

Der Zug-E-Modul der aus den erfindungsgemäßen Copolyamiden hergestellten Formteile liegt bei höchstens 1700 MPa, bevorzugt bei höchstens 1500 MPa und besonders bevorzugt bei höchstens 1300 MPa und ändert sich bei Wasseraufnahme (Konditionierung) praktisch nicht. Damit besitzen die erfindungsgemässen Formteile mittlere bis hohe Flexibilitäten im Bereich von 500 - 1700 MPa, bevorzugt im Bereich von 500 bis 1500 MPa, besonders bevorzugt von 500-1300 MPa, ähnlich den aliphatischen Polyamiden, aufgebaut aus langkettigen flexiblen Monomeren, insbesondere wie z. B. Polyamid 11 oder Polyamid 12.

Diese erfindungsgemäßen Copolyamide (A) und gegebenenfalls Polymere (B) enthaltenden Formmassen können auf üblichen Polymerisationsanlagen hergestellt werden und durch thermische Umformung zu Formteilen verarbeitet werden. Neben der Spritzgussverarbeitung können auch Verfahren wie Profil- oder Folienextrusion, Spritzstreckblasen, Spritzblasen, Spritzprägen, Hinterspritzen oder Tiefziehen angewendet werden (vergleiche Anspruch 13). Formteile, hergestellt aus den teilkristallinen, transparenten Copolyamiden (A) mit hochwertigen Oberflächen werden als Unterstützung einer "High End quality" Positionierung von Autoausstattungen, Haushaltsgeräten, Unterhaltungselektronik im Sichtbereich eingesetzt.

Formteile, hergestellt aus den teilkristallinen, transparenten Copolyamiden mit hoher Transparenz und hoher Flexibilität erlauben zudem Anwendungen im Bereich von Sportgeräten, Sportschuhen, Sohlen für Sportschuhe, transparente flexible Schuhsohlen für Profi- Laufschuhe und andere Schuhe jeder Art.

Formteile, hergestellt aus den teilkristallinen, transparenten Copolyamiden mit ausgezeichnete Zähigkeit bei tiefen Temperaturen erlauben weiterhin bevorzugt Anwendungen im Bereich von Ausrüstungsgegenständen, Skischuhen, Skibindungen. Sicherheitsausrüstungen Schutzbrillen, Helmen, Protektoren für Wintersport, Fahrradsport oder Motorradsport.

Formteile, hergestellt aus den teilkristallinen, transparenten Copolyamiden mit hoher Flexibilität, Zähigkeit bei tiefen Temperaturen und ausgezeichneter chemischer Resistenz gegen Reinigungschemikalien, eignen sich weiterhin für Installationen, Schutzeinrichtungen, Halterungen oder Verscheibungen, insbesondere für Kühlräumen oder Kühlschränken.

Formteile, hergestellt aus den teilkristallinen, transparenten Copolyamiden mit ausgezeichneten Oberflächen können auf bekannten Verarbeitungsanlagen nach bekannten Verfahren zu hochwertigen Formteilen verarbeitet werden, welche als Sonnenlinsen, optische Linsen, Gehäuse- oder Displaymaterial für Mobiltelefone, GPS Geräte, MP3 Player, Brillen, Foto-Linsen, Kameragehäuse, optische Geräte, Ferngläser etc. eingesetzt werden. Die Formmasse kann zu transparenten Rohren, Schläuchen, Leitungen, Folien und Profilen verarbeitet werden.

Als Monomere mit natürlicher Rohstoffbasis stehen heute praktisch nur aliphatische Monomere zur Verfügung. Sie müssen mit cycloaliphatischen, aromatischen oder verzweigten Monomerbausteinen kombiniert werden, um transparente Produkte zu erhalten. Der erfindungsgemäß geforderte Bioanteil von wenigstens 70% verlangt aber hohe Mengen an aliphatischen Anteilen, wodurch zum einen die Glasübergangstemperatur (Tg), die Steifigkeit und die Lichttransmission (als Maß für die Transparenz) herabgesetzt und zum anderen die Trübung (Haze) erhöht wird. Hier sei beispielhaft eine Zusammensetzung des Typs PA10I/1010 genannt, die einen Bioanteil über 50% aufweist. Mit mittlerer oder tiefer Konzentration des Systems 10 I(I = Isophthalsäure) wird ein Tg von kleiner 80°C erreicht, die Transparenz überschreitet 90%, der Haze liegt aber mit 20% außerhalb des für hochwertige optische Anwendungen tolerierbaren Bereiches.

Zusammensetzungen des Typs MACM10/1010 oder PACM12/1012 mit einem Bioanteil durch Decandiamin und Decandisäure von unter 70% sind amorph und zeigen mit Tg's oberhalb 80°C akzeptable Wärmeformbeständigkeiten. Die Transparenz ist sehr gut, der Haze akzeptabel.

Überraschenderweise wurde durch die Erfinder der vorliegenden Anmeldung festgestellt, dass die Copolyamide MACM 6-36/6-36 6-36, bevorzugt die Copolyamide MACM 9-18 /9-14 9-18, insbesondere die Copolyamide MACM 9-18/10-12 9-18 oder MACM 9-18/10 9-18 die gewünschten oben angesprochenen Eigenschaften aufweisen. Mit zunehmendem aliphatischen Monomeranteil nimmt erwartungsgemäß die Kristallinität dieser Polyamidsysteme zu. Die dabei erwartete Eintrübung (Zunahme des Haze) dieser teilkristallinen Polyamide tritt aber überraschenderweise nicht ein, selbst dann nicht, wenn die Konzentration des aliphatischen Diamins bis auf 90 Mol-% des Gesamtdiamingehaltes erhöht wird. Die Glasumwandlungstemperatur fällt wie erwartet unter 80°C, wenn die Konzentration des cycloaliphatischen Diamin unter 40 Mol% sinkt. Die Wärmeformbeständigkeit, die bei den üblichen transparenten Polyamiden mit dem Tg korreliert, wird aber durch die zunehmende Kristallinität wieder auf ein akzeptables Niveau gehoben (vergleiche in diesem Zusammenhang VB8 mit B4, B5 und B6 sowie VB9 mit B7 und B8 in den Beispielen, weiter unten). Beispielsweise haben die Copolyamide

MACM10/1010 mit einem MACM10-Anteil von 26 Mol-% eine Glasübergangstemperatur von 61°C und der Bioanteil liegt bei 83%. Gleichzeitig hat dieses Copolyamid einen Schmelzpunkt von 172°C und eine hohe Schmelzenthalpie von 43 J/g, womit die Kristallinität vergleichbar zu einem nicht transparenten Polyamid 12 ist. Wird der aliphatische Monomeranteil weiter erhöht, nimmt der Tg ab, der Schmelzpunkt und die Kristallinität aber weiter zu. Entgegen den Erwartungen liegen der Haze, gemessen an Platten der Dicke 2mm, unter 5% und die Transmissionswerte mit über 93% auf sehr hohem Niveau. Der Glanz, gemessen unter einem Winkel von 20°, erreicht Höchstwerte mit ca. 150%. In hochtransparenten Materialien steigen die Glanzwerte über 100%, da die untere Oberfläche ebenfalls Licht reflektiert, das zur oberen Oberfläche hinzuaddiert wird.

Copolyamide des Typs MACM12/1012, MACM14/1014 und MACM18/1018 zeigen vergleichbares Verhalten wie die MACM10/1010 Typen. Die Glasübergangstemperaturen (Tg) liegen mit zunehmender Länge der aliphatischen Monomeren tiefer, die Flexibilität nimmt zu, während der Zug-E-Modul abnimmt. Entgegen den Erwartungen bleibt auch hier mit zunehmender Kristallinität die hohe Transparenz erhalten. Entgegen den Erwartungen nimmt die Kerbschlagzähigkeit dieser teilkristallinen, transparenten Copolyamide insbesondere bei tiefen Temperaturen mit steigender Kettenlänge der aliphatischen Monomeren zu und übersteigt deutlich das Niveau, das für teilkristallines, nicht transparentes Polyamid 12 erreichbar ist.

Der Wert der Lichttransmission, welche als Maß für die Transparenz verwendet wird, ist dabei im Rahmen der vorliegenden Anmeldung stets als bestimmt nach der Methode ASTM D1003 (Lichtart CIE-C) zu verstehen. Die Messung der Lichttransmission wurde dabei in den unten angeführten Experimenten auf einem Gerät mit dem Namen Haze Guard Plus der Firma BYK Gardner (DE) an Rundplatten 70 x 2mm oder Platten der Dimension 60 x 60 x 2mm durchgeführt. Der Transmissionswert wird für den sichtbaren Wellenlängenbereich definiert nach CIE-C d. h. mit wesentlichen Intensitäten ca. zwischen 400 und 770nm, angegeben. Die Rundplatten 70 x 2mm werden z. B. dafür auf einer Arburg Spritzgussmaschine im polierten Werkzeug hergestellt, wobei die Zylindertemperatur zwischen 200°C und 340°C und die Werkzeugtemperatur zwischen 20°C und 140°C liegt.

Die erfindungsgemäßen transparenten Copolyamide weisen somit die hier definierte Lichttransmission auf und besitzen eine teilkristalline Morphologie. Bevorzugtermaßen handelt es sich bei den teilkristallinen Copolyamiden um Polyamid-Systeme, welche in hochmolekularer Form und ohne weitere Bestandteile verarbeitet, transparente Formteilen ergeben, d. h. die Dimension der Kristallite im Formteil ist kleiner als die Wellenlänge des sichtbaren Lichtes (mikrokristalline Polyamide).

Die aus den erfindungsgemäßen, unverstärkten Formmassen hergestellten Formteile zeigen Steifigkeiten mit Zug-E-Moduli von höchstens 1700 MPa, bevorzugt mit Zug-E-Moduli von höchstens 1500 MPa, besonders bevorzugt von höchstens 1300 MPa. Die Prüfkörper zur Messung der Schlagwerte nach Charpy blieben bei Raumtemperatur (23°C) und bei -30°C ohne Bruch.

Bevorzugtermaßen beruht die Copolyamidkomponente (A) zu mehr als 70% auf nachwachsenden Rohstoffen. Dies wird erreicht, indem hauptsächlich Monomere, wie z. B. Azelainsäure, Sebacinsäure, Tetradecandisäure, C36-Dimerfettsäure, Aminoundecansäure, Nonandiamin, Decandiamin und Tetradecandiamin, zum Einsatz kommen, die aus diversen Pflanzenölen gewonnen werden.

Ein für die Monomerherstellung wichtiges Pflanzenöl ist das Rizinusöl, das aus dem Samen des afrikanischen Wunderbaumes (Rizinus Communis) gewonnen wird. Das Rizinusöl besteht zu 80 bis 90% aus dem Triglyzerid der Rizinolsäure sowie aus weiteren Glyceriden verschiedener C18-Fettsäuren. Seit Jahrtausenden wird Rizinusöl bereits als Heilmittel verwendet, es findet aber auch seit langem bei technischen Ölen, Kosmetika, Beschichtungen und Hydraulikölen Einsatz. Die Sebacinsäure wird durch alkalische Spaltung von Rizinusöl bei hohen Temperaturen und nachfolgender Behandlung mit Salzsäure erhalten. Aus dem Methylester der Rizinussäure wird durch pyrolytische Zersetzung Heptaldehyd und Methyl-10-undecensäureester gewonnen, wobei letzterer über mehrere Reaktionsstufen in die 11 - Aminoundecansäure überführt wird.

Azelainsäure und Brassilsäure basieren ebenfalls auf natürlichen Rohstoffen, sie werden durch Ozonolyse der Öl- bzw. Erucasäure hergestellt. Die Erucasäure wird aus dem Samen von Raps, Senf, Goldlack oder Kresse gewonnen.

Die C36-Dimersäuren werden durch thermische Dimerisierung von ungesättigten C18-Carbonsäuren oder deren Ester hergestellt. Ausgangsstoffe sind z. B. Tallölfettsäuren sowie die Öl - oder Linolensäure.

Nonandiamin, Decandiamin und Tridecandiamin beruhen ebenfalls auf natürlichen Rohstoffen, da sie aus den entsprechenden Dicarbonsäuren z. B. über die Dinitrilroute hergestellt werden.

Weitere Rohstoffe, beispielsweise gewonnen durch mikrobiologische Fermentation, befinden sich im industriellen Aufbau und können ebenfalls eingesetzt werden.

Das transparente Copolyamid (A) ist also besonders bevorzugt dadurch charakterisiert, dass es einen Bioanteil nach ASTM D6866-06a von mindestens 70 Gew.%, bevorzugt von mindestens 75 Gew.-% und insbesondere von mindestens 80 Gew.-%, aufweist.

Damit die erfindungsgemäßen Polyamidformmassen die oben geforderten Eigenschaften besitzen, muss insbesondere die Konzentration an cycloaliphatischem Diamin in der Komponente (A) von 10 bis höchstens 40 Mol-%, bevorzugt höchstens 35 Mol-% und besonders bevorzugt höchstens 30 Mol-%, jeweils bezogen auf den Gesamtdiamingehalt, betragen. Somit werden cycloaliphatische Diamine in einem Konzentrationsbereich von 10 bis 35 Mol-%, bevorzugt im Bereich von 12 bis 30 Mol-%, bezogen auf den Gesamtdiamingehalt, eingesetzt. Die Konzentration an aliphatischem Diamin beträgt erfindungsgemäß immer mindestens 60 Mol-%, insbesondere mindestens 65 Mol-%.

In einer erfindungsgemäßen Ausführungsform kann bevorzugt als Diamin eine Mischung aus 10 bis 35 Mol-% Bis-(4-amino-3-methyl-cyclohexyl)-methan (MACM) und 65 bis 90 Mol-% mindestens eines linearen oder verzweigtkettigen aliphatischen Diamins mit 9 bis 14 Kohlenstoffatomen, insbesondere Decandiamin, jeweils bezogen auf die Gesamtmenge an Diaminen, verwendet werden. Bevorzugt werden erfindungsgemäß die aliphatischen Diamine 1,9-Nonandiamin, 1,10-Decandiamin, 1,11-Undecandiamin, 1,12-Dodecandiamin, 1,13-Tridecandiamin oder 1,14-Tetradecandiamin eingesetzt, wobei besonders bevorzugt als aliphatisches Diamin 1,10-Decandiamin verwendet wird.

Die aliphatischen Diamine werden aber erfindungsgemäß generell immer ausgewählt aus der Gruppe, bestehend aus Methyl-1,8-oktandiamin, 1,9-Nonandiamin, 1,10-Decandiamin, 1,11-Undecandiamin, 1,12-Dodecandiamin, 1,13-Tridecandiamin, 1,14-Tetradecandiamin. Im Zusammenhang mit der vorliegenden Anmeldung wird unter dem Begriff "aliphatische Verbindungen" immer eine Verbindung verstanden, deren Kohlenstoffatome in geraden oder verzweigten Ketten angeordnet sind, im Gegensatz zu den zyklischen Verbindungen, bei denen die Kohlenstoffatome Ringe bilden.

Die cycloaliphatischen Diamine werden aber erfindungsgemäß generell ausgewählt aus der Gruppe, bestehend aus Bis-(4-amino-3-methyl-cyclohexyl)-methan (MACM), 2,2-Bis-(4-amino-3-methyl-cyclohexyl)-propan, Bis-(4-amino-3-ethylcyclohexyl)-methan (EACM), Bis-(4-amino-3,5-dimethylcyclohexyl)-methan (TMACM), Isophorondiamin (5-Amino-1,3,3-trimethyl-cyclohexanmethanamin), 1,3-Diaminocyclo-hexan, 1,3-Diaminomethyl-cyclohexan, 2,5- bzw. 2,6-Bis-(aminomethyl)-norbornan (DN), 2,5- bzw. 2,6-Diaminonorbornan. Bevorzugt werden das cycloaliphatische Diamin PACM und die alkylsubstituierten Bis-(4-amino-cyclohexyl)-methan-Derivate MACM, EACM und/oder TMACM, insbesondere MACM (vergleiche Anspruch 4) verwendet.

Der in dieser Anmeldung verwendete Ausdruck PACM steht für die ISO-Bezeichnung Bis-(4-amino-cyclohexyl)-methan, welches unter dem Handelsnamen 4,4'-Diaminodicyclohexyl-methan als Dicykan-Typ (CAS Nr. 1761-71-3) kommerziell erhältlich ist. Der Ausdruck MACM steht für die ISO-Bezeichnung Bis-(4-amino-3-methyl-cyclohexyl)-methan, welches unter dem Handelsnamen 3,3'-Dimethyl-4,4'-diaminodicyclohexylmethan als Laromin C260-Typ (CAS Nr. 6864-37-5) kommerziell erhältlich ist.

Im Sinne der vorliegenden Erfindung ist beabsichtigt, dass die Ausdrücke PACM bzw. MACM alle Trivialnamen, Handelsnamen oder andere, dem Fachmann geläufige Namen einschießen, die den chemischen Strukturen der vorstehenden Verbindungen entsprechen.

Bevorzugt wird als aliphatische Disäure eine Säure, ausgewählt aus der Gruppe, bestehend aus Azelainsäure, Sebacinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure und Gemischen daraus, eingesetzt. Besonders bevorzugt sind Sebacinsäure, Dodecandisäure, Tetradecandisäure und Oktadecandisäure.

Erfindungsgemäß bevorzugte Copolyamide (A) sind daher MACM9/109, MACM 10/1010, MACM11/1011, MACM12/1012, MACM3/1013, und MACM 14/1014, MACM15/1015, MACM16/1016, MACM17/1017, MACM18/1018, MACM9/119, MACM 10/1110, MACM11/1111, MACM12/1112, MACM13/1113, und MACM 14/1114, MACM15/1115, MACM16/1116, MACM17/1117, MACM18/1118, MACM9/129, MACM 10/1210, MACM11/1211, MACM12/1212, PACM13/1213, und MACM 14/1214, MACM15/1215, MACM16/1216, MACM17/1217 und MACM18/1218.

Erfindungsgemäß besonders bevorzugte Copolyamide (A) sind MACM10/1010. MACM1211012, MACM 14/1014 und MACM18/1018.

Als Wiederholungseinheit LC werden in Formel (I) bevorzugt Lactam 11 und Lactam 12 sowie $\alpha,\omega$-Aminocarbonsäuren mit 10 bis 12 Kohlenstoffatomen oder Mischungen davon eingesetzt. Bevorzugt sind Lactame aus nachwachsenden Rohstoffen sowie Aminoundecansäure.

Als Komponente (B) kann ein weiteres Polymer eingesetzt werden, das bevorzugt ein amorphes oder teilkristallines Polyamid oder Copolyamid gemäß der nachfolgenden Formel (II) ist:

$$(MACMX)_x/(PACMY)_y/(MXDV)_v/LC_z \qquad (II),$$

wobei

X, Y, V = aliphatische Dicarbonsäure(n) mit 9 bis 18 und 36 Kohlenstoffatomen sowie Terephthalsäure (T) und Isophthalsäure (I), sowie Mischungen davon
x = 0 - 100 Gew.-%,
y = 0 - 100 Gew.-%,
v = 0 - 100 Gew.-%,
LC = Lactam(e) und/oder Aminocarbonsäure(n) mit 6 bis 12 Kohlenstoffatomen,
z = 0 - 100 Gew.-%,
v + x + y + z = 100 Gew.-%.

Bevorzugte Vertreter dieses Typs der Komponente (B) sind beispielsweise folgende Polyamide oder Copolyamide: MACM9, MACM10, MACM11, MACM12, MACM13, MACM 14, MACM15, MACM16, MACM17, MACM18, MACM36, MACMI/12, MACMI/MACMT/12, MACMI/PACMT/12, PA11, PA12, wobei I für Isophthalsäure und T für Terephthalsäure steht.

Darüber hinaus kann das weitere Polymer (Komponente (B)) ausgewählt werden aus der Gruppe, bestehend aus Polyetheresteramiden, Polyetheramiden, Polyesteramiden oder deren Gemischen. Diese Copolymere können statistisch, alternierend oder blockweise aufgebaut sein. Der Polyamidanteil basiert dabei bevorzugt auf den Polyamiden PA6, PA66, PA69, PA610, PA612, PA99, PA1010, PA1011, PA1012, PA1013, PA1014, PA1015, PA1016, PA1017, PA1018, PA11, PA12 oder deren Mischungen, wobei das Decandiamin ganz oder teilweise durch Undecandiamin oder Dodecandiamin ersetzt sein kann. Bevorzugt sind die Polamidtypen PA1010, PA11 und PA12. Die Polyetherkomponenten dieser Copolymere basieren auf den Diolen oder Diaminen der Polyethylengykole und/oder Polypropylenglykole und/oder Polytetramethylengykole. Die Ester- oder Polyesterkomponenten beruhen auf Polyestern aliphatischer und/oder aromatischer Dicarbonsäuren mit aliphatischer Diolen, bevorzugt auf Dimerfettsäurediolen.

Die erfindungsgemäßen Polyamidformmassen enthalten bevorzugt:

55 bis 100 Gew.-% Komponente (A),
0 bis 45 Gew.-% Komponente (B),
0 bis 5 Gew.-% Komponente (C),

und besonders bevorzugt:

65 bis 90 Gew.-% Komponente (A),
10 bis 35 Gew.-% Komponente (B),
0 bis 5 Gew.-% Komponente (C).

Die erfindungsgemäßen Polyamidformmassen können aber die üblichen Additive (Komponente C) in den üblicherweise geringen Anteilen (weniger als 10 Gew.-%, bevorzugtermaßen weniger als 5 Gew.-%, insbesondere bevorzugt weniger als 3 Gew.-%) aufweisen. Bei den genannten Additiven kann es sich um Stabilisatoren wie UV-Stabilisatoren, Hitzestabilisatoren, Radikalfänger und/oder um Verarbeitungshilfsstoffe, Einschlussverhinderer, Gleitmittel, Entformungshilfsstoffe, Weichmacher und/oder um funktionelle Additive bevorzugt zur Beeinflussung optischer Eigenschaften wie insbesondere des Brechungsindexes oder um Kombinationen oder Mischungen davon handeln. Desweiteren können die Formmassen (als Komponente C) nanoskalige Füll- und/oder Funktionsstoffe, wie z. B. Schichtmineralien oder Metalloxide, die den Brechungsindex erhöhen, oder optische Aufheller oder Farbstoffe, wie z. B. photochrome Farbstoffe beinhalten.
Im Sinne der Erfindung können die Formmassen außerdem dem Fachmann geläufige Füll- und/oder Zuschlagstoffe, beispielsweise Glasfasern, Glaskugeln, Carbonfasern, Ruß, Graphit, Flammschutzmittel, Mineral wie zum Beispiel Titandioxid, Calciumcarbonat oder Bariumsulfat, oder beispielsweise Schlagzähmodifikatoren, wie funktionalisierte Polyolefine, enthalten.
Bevorzugte Schlagzähmodifikatoren stammen aus der Gruppe, ausgewählt aus säuremodifizierten Ethylen-$\alpha$-Olefin-Copolymeren, Ethylen-Glycidylmethacrylsäure-Copolymeren und Methacrylat-Butadien-Styrol-Copolymeren.
Den erfindungsgemäßen Formmassen können aber auch Füll- oder Verstärkungsmittel zugegeben werden. In diesem Fall sind die aus den Formmassen hergestellten Formteile natürlich nicht transparent. Neben Glas- und Kohlenstofffasern können als Verstärkungsmittel besonders solche auf Basis von nachwachsenden Rohstoffen und Bioanteilen über 50% eingesetzt werden. Besonders bevorzugt werden Naturfasern, wie z. B. Cellulose-, Hanf-, Flachs-, Baumwoll-, Woll- oder Holzfasern eingesetzt.
Die Herstellung der Polymerkomponenten (A) und (B) erfolgt in bekannten Druckgefäßen. Zunächst wird eine Druckphase bei 230°C bis 300°C gefahren. Danach folgt die Entspannung bei 230°C bis 300°C. Die Entgasung wird bei 240°C bis 300°C durchgeführt. Anschließend wird die Polyamidformmasse in Strangform ausgetragen, im Wasserbad auf 5°C bis 80°C gekühlt und granuliert. Das Granulat wird 12h bei 80°C auf einen Wassergehalt unter 0,06% getrocknet. Während der Trocknung mit gleichzeitiger Umwälzung des Granulates können Additive wie Gleitmittel, Farbstoffe, Stabilisatoren oder andere auf das Granulat aufgetragen oder aufgesintert werden.
Zur Einstellung der gewünschten relativen Viskosität (Komponenten (A), (B)), gemessen in 0,5 gew.-%iger m-Kresollösung, von 1,45 bis 2,30, bevorzugt 1,55 bis 2,00 und insbesondere bevorzugt von 1,60 bis 1,90 können entweder das Diamin oder die Dicarbonsäuren in geringem Überschuss von 0,01 bis 2 Mol-% eingesetzt werden. Bevorzugt wird die Regelung mit Monoamin oder Monocarbonsäuren von 0,01 bis 2,0 Gew.-%, bevorzugt 0,05 bis 0.5 Gew.-% durchgeführt. Geeignete Regler sind Benzoesäure, Essigsäure, Propionsäure, Stearylamin oder deren Mischungen. Besonders bevorzugt sind Regler mit Amin- oder Carbonsäuregruppen, die zusätzlich Stabilisatorgruppen des Typs HALS oder des Typs tert-Butyl-Phenol enthalten, wie beispielsweise Triacetondiamin oder Isophthalsäure-Di-Triacetondiamin-Derivate.
Geeignete Katalysatoren zur Beschleunigung der Polykondensationsreaktion sind phosphorhaltige Säuren, wie beispielsweise $H_3PO_2$, $H_3PO_3$, $H_3PO_4$, deren Salze oder organischen Derivate, die gleichzeitig eine Reduzierung der Verfärbung während der Verarbeitung bewirken. Die Katalysatoren werden im Bereich von 0,01 bis 0,5 Gew.-%, bevorzugt im Bereich von 0,03 bis 0,1 Gew.-% zugegeben. Geeignete Entschäumer zur Vermeidung der Schaumbildung während der Entgasung sind wässrige Emulsionen, die Silicone oder Siliconderivate im Bereich von 0,01 bis 1,0 Gew.%, bevorzugt im Bereich von 0,01 bis 0,10 bei 10%iger Emulsion enthalten.
Geeignete Hitze- oder UV-Stabilisatoren können bereits vor der Polykondensation dem Ansatz in Mengen von 0,01 bis 0,5 Gew.-% zugegeben werden. Bevorzugt werden hochschmelzende Typen eingesetzt. Besonders bevorzugt wird Irganox 1098 verwendet.
Die Ausrüstung der erfindungsgemäßen, transparenten Formmassen mit Additiven wie beispielsweise Stabilisatoren, Gleitmittel wie beispielsweise Paraffnöle oder Stearate, Farbstoffe, Füllstoffe, Schlagzähmodifikatoren wie beispielsweise Terpolymere aus Ethylen-Glycidyl-Methacrylat, bevorzugt mit einem Brechungsindex im Bereich der erfindungsgemäßen Formmassen oder Maleinsäureanhydrid gepfropfte Polyethylene, Propylene oder Verstärkungsstoffe wie beispielsweise transparent dispergierbare Nano-Partikel oder Glaskugeln oder Glasfasern, oder Mischungen der Additive, kann durch nachfolgende bekannte Mischverfahren, insbesondere Extrusion auf Ein- oder Mehrwellenextrudern mit Massetemperaturen zwischen 250°C bis 350°C, erfolgen.

Geeignete Verfahren zur Herstellung hochtransparenter Formteile aus den erfindungsgemäßen, transparenten Polyamidformmassen sind Spritzgießverfahren oder Spritzprägeverfahren bei Massetemperaturen von 230°C bis 320°C, wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heiße Formteil aufbringt. Besonders geeignete Verfahren zur Herstellung von fehlerfreien, spannungsarmen Oberflächen des Formteils aus den erfindungsgemäßen, transparenten Polyamidformmassen, wie beispielsweise Linsen für Brillen oder hochwertige Gehäuseteile, ist ein Expansionsspritzprägeprozess, wobei Kavitäten mit Wandstärken von 1 bis 5mm gefüllt werden und anschließend die Werkzeugkavität bei permanenter Füllung auf höhere Wandstärken auseinander gefahren wird.

Geeignete Verfahren zur Herstellung von Folien, Rohren und Halbzeugen in Ein- oder Mehrschichtausführung aus den erfindungsgemäßen, transparenten Polyamidformmassen sind Extrusionsverfahren auf Ein- oder Mehrwellenextrudern mit Massetemperaturen zwischen 250°C bis 350°C, wobei je nach Verträglichkeit der verschiedenen Schichten geeignete Haftvermittler in Form entsprechender Copolymere oder Blends eingesetzt werden können.

Formteile, die aus den erfindungsgemäßen Polyamidformmassen aufgebaut sind, können miteinander nach üblichen Verfahren wie beispielsweise durch Ultraschallschweißen, Glühdrahtschweißen, Friktionsschweißen, Rotationsschweißen oder Laserschweißen durch Ausrüstung mit laseraktiven Farbstoffen mit Absorption im Bereich 800nm bis 2000nm, miteinander verbunden werden.

Geeignete Verfahren zur Herstellung von Hohlkörpern und Flaschen in Ein- oder Mehrschichtausführung aus den erfindungsgemäßen, transparenten Polyamidformmassen sind Spritzblasverfahren, Spritzstreckblasverfahren und Extrusionsblasverfahren.

Die erfindungsgemäßen Formmassen können auch zu Folien, wie z. B. Flachfolien, Blasfolien, Gießfolien, Mehrschichtfolien verarbeitet werden. Eine Weiterverarbeitung der Folien erfolgt bevorzugt durch Kaschieren, Hinterspritzen, Recken, Verstrecken, Bedrucken oder Färben.

Formteile können massegefärbt oder mittels sogenannter Tauchbäder nachträglich eingefärbt werden. Formteile werden gegebenenfalls durch Fräsen, Bohren, Schleifen, Lasermarkieren, -schneiden und/oder -schweißen bearbeitet.

Geeignete Verwendungen für Formteile, die aus den erfindungsgemäßen, transparenten Polyamidformmassen aufgebaut sind, sind Schaugläser für Heizungstechnik mit direktem Ölkontakt, Filtertassen für Trinkwasseraufbereitung, Babyflaschen, Flaschen für Carbonisierung, Essgeschirr, Durchflussmesser für Gase oder flüssige Medien, Uhrengehäuse, Gehäuse für Armbanduhren, Lampengehäuse und Reflektoren für Autolampen.

Die Erfindung wird nun näher durch die folgenden Beispiele erläutert, ohne sie jedoch darauf zu beschränken.

Beispiele

Die Herstellung der erfindungsgemäßen Polyamidformmasse erfolgt in bekannten Versuchs-Druckautoklaven mit 130 L Volumen. Zunächst wird eine Druckphase bei 290°C gefahren. Danach folgt die Entspannung bei 280°C. Die Entgasung wird ebenfalls bei 280°C durchgeführt. Anschließend wird die Polyamidformmasse in Strangform ausgetragen, im Wasserbad gekühlt und granuliert. Das Granulat wird 12h bei 80°C auf einen Wassergehalt unter 0,06% getrocknet. Die Herstellung hochtransparenter Formteile bzw. Probekörper aus den erfindungsgemäßen, transparenten Polyamidformmassen wurde auf einer Arburg 420C Allrounder 1000-250 Spritzgießmaschine bei Massetemperaturen von 250°C bis 280°C durchgeführt, wobei das Werkzeug auf die Temperatur von 60°C eingestellt wurde. Die Schneckendrehzahl betrug 150 bis 400 Upm.

Die entstandenen Materialien bzw. Formteile weisen die in den Tabellen 1 und 2 aufgeführten Kenndaten auf.

In Tabelle 1 und 2 bedeuten

VB = Vergleichsbeispiel, B = erfindungsgemäßes Beispiel;

o.B. = ohne Bruch, n.m. = nicht messbar, n.b. = nicht bestimmt.

Die relative Viskosität ($\eta$rel) wurde bestimmt nach DIN EN ISO 307, in 0,5 gew.-%iger m-Kresollösung bei einer Temperatur von 20°C,

Die Glasumwandlungstemperatur (Tg), der Schmelzpunkt (Tm) und die Schmelzwärme (HM) wurden bestimmt nach ISO 11357-1/2. Die Differential scanning calorimetry (DSC) wurde mit einer Aufheizrate von 20K/min durchgeführt.

Zug-E-Modul, Reissfestigkeit und Reissdehnung wurden nach ISO 527 mit einer Zuggeschwindigkeit von 1mm/min (Zug-E-Modul) bzw. 50mm/min (Reissfestigkeit, Reissdehnung) am ISO-Zugstab, Norm: ISO/CD 3167, Typ AI, 170 x 20/10 x 4mm bei Temperatur 23°C bestimmt.

Schlagzähigkeit und Kerbschlagzähigkeit nach Charpy wurden nach ISO 179/keU am ISO-Prüfstab, Norm: ISO/CD 3167, Typ B1, 80 x 10 x 4mm bei einer Temperatur von -30°C und 23°C gemessen.

Lichttransmission (Transparenz) und Haze wurden nach ASTM D 1003 an Platten der Dimension 2 x 60 x 60mm oder an Rundplatten 2 x 70mm bei einer Temperatur von 23°C mit dem Messgerät Haze Gard Plus der Firma Byk Gardner mit der CIE Lichtart C bestimmt. Die Lichttransmissionswerte werden in % der eingestrahlten Lichtmenge angegeben.

Haze nach Lagerung in Alkoholen:

Platten der Dimension 2x60x60mm wurden für einen Zeitraum von 60 Minuten bei 23°C in Methanol, Isopropanol und Ethanol der Reinheitsstufe puriss. p.a.; sowie in handelsüblichem Spiritus gelagert. Der Haze wird nach Trocknung der Platten bei 23°C gemäß ASTM D 1003 bestimmt.

Der Glanz wurde nach DIN EN ISO 2813 an einer Rundplatte der Dimension 70 x 2mm bei einer Temperatur von 23°C mit einem Minolta Multi Gloss 268 unter einem Windel von 20° und 60° gemessen.

Der MVR (Melt Volume Rate), gemessen in $cm^3$/10min, wurde nach ISO 1133 bei 275°C und einer Belastung von 5 kg bestimmt.

Der Feuchtegehalt wurde nach der Methode ISO 155/12 gemessen.

Der Bioanteil wurde in Anlehnung an ASTM D6866-06a berechnet und entspricht dem prozentualen Gewichtsanteil der auf nachwachsenden Rohstoffen basierenden Struktureinheiten der betrachteten Polyamide.

Der HDT B (0,45 MPa) wurde nach ISO 75 bestimmt.

Tabelle I

| Beispiel | | B1 | B2 | B3 | B4 | B5 | B6 | B7 | B8 |
|---|---|---|---|---|---|---|---|---|---|
| Polyamid/Copolyamid gemäß ISO 1874 | | MACM10/1010 (26:74) | MACM12/1012 (26:74) | MACM12/1012 (18:82) | MACM14/1014 (26:74) | MACM14/1014 (18:82) | MACM14/1014 (12:88) | MACM18/1018 (28:72) | MACM18/1018 (18:82) |
| Zusammensetzung | | | | | | | | | |
| MACM | mol % | 13 | 13 | 9 | 13 | 9 | 6 | 14 | 9 |
| 1,10-Decandiamin | mol% | 37 | 37 | 41 | 37 | 41 | 44 | 36 | 41 |
| Sebacinsäure | mol% | 50 | 0 | 0 | 0 | 0 | 0 | 0 | 0 |
| Dodecandisäure | mol % | 0 | 50 | 50 | 0 | 0 | 0 | 0 | 0 |
| Tetradecandisäure | mol % | 0 | 0 | 0 | 50 | 50 | 50 | 0 | 0 |
| Oktadecandisäure | mol-% | 0 | 0 | 0 | 0 | 0 | 0 | 50 | 50 |
| Laurinlactam | mol% | 0 | 0 | 0 | 0 | 0 | | | |
| Bioanteil (ASTM D6866-06a) | % | 82,7 | 84,0 | 88,8 | 85,1 | 89,5 | 93,0 | 85,9 | 90.8 |
| Eigenschaften | | | | | | | | | |
| Glasübergangstemperatur | °C | 61 | 56 | 42 | 53 | 41 | 34 | 43 | 32 |
| Schmelztemperatur | °C | 172 | 170 | 177 | 163 | 170 | 176 | 156 | 164 |
| Schmelzenthalpie | J/g | 43 | 35 | 42 | 34 | 43 | 47 | 41 | 48 |
| HDT B (konditioniert) | °C | 58 | 85 | 88 | 81 | 83 | 84 | 74 | 79 |
| Relative Viskosität | | 1,87 | 1,86 | 1,9 | 1,98 | 1,92 | 1,94 | 1,82 | 1,84 |
| MVR 275°C/5kg | cm³/10min | 52 | 55 | 43 | 79 | 53 | 45 | 54 | 53 |
| **Beispiel** | | **B1** | **B2** | **B3** | **B4** | **B5** | **B6** | **B7** | **B8** |
| Eigenschaften | | | | | | | | | |
| Wasseraufnahme 23°C/50% rel. Feuchte | % | 1,0 | 0.9 | 0,9 | 0,8 | 0,8 | 0.7 | 0,7 | 0,7 |
| Zug-E-Modul trocken | MPa | 1505 | 1345 | 1350 | 1225 | 1090 | 1060 | 940 | 670 |
| Zug-E-Modul konditioniert | MPa | 1685 | 1400 | 1325 | 1250 | 1195 | 1020 | 910 | 650 |

EP 2 291 457 B1

(fortgesetzt)

| Beispiel | | B1 | B2 | B3 | B4 | B5 | B6 | B7 | B8 |
|---|---|---|---|---|---|---|---|---|---|
| Eigenschaften | | | | | | | | | |
| Streckspannung | MPa | 53 | 48 | 43 | 45 | 40 | 37 | 33 | 25 |
| Reissdehnung | %* | 170 | 170 | 170 | 190 | 200 | 260 | 300 | 320 |
| Schlagzähigkeit Charpy 23°C | kJ/m² | o.B. | o.B. | o.B. | o.B. | o.B. | o.B. | o.B. | o.B. |
| Kerbschlagzähigkeit Charpy 23°C | kJ/m² | 9,7 | 10,3 | 13,6 | 12,5 | 12,3 | 13,3 | 80% o.B. | o.B. |
| Kerbschlagzähigkeit Charpy -30°C | kJ/m² | 15,0 | 15,2 | 15,4 | 15,7 | 16,4 | 17,2 | o.B. | o.B. |
| Haze (2 mm) | % | 1,7 | 1,9 | 2.7 | 1,3 | 1,4 | 1,4 | 0,8 | 2,6 |
| Lichttransmission (2 mm) | % | 93,6 | 93,8 | 93,2 | 93,8 | 93.4 | 93,7 | 93,8 | 93,3 |
| Gloss 20° | % | 151 | 152 | 127 | 150 | 145 | 150 | 145 | 112 |
| Haze (2mm) nach Lagerung | | | | | | | | | |
| in Methanol | % | 4,4 | 4,0 | 3,9 | 1,5 | 1,4 | 1,8 | 1,2 | 2.8 |
| in Ethanol | % | 4,7 | 2,8 | 5.5 | 1.6 | 1,7 | 2,2 | 1,1 | 4.2 |
| in Isopropanol | % | 2,8 | 3,3 | 3,1 | 1,4 | 1,3 | 1,5 | 1,2 | 3.7 |
| in Spiritus | % | 3,1 | 3,1 | 3,6 | 2,0 | 1,4 | 1,6 | 1,2 | 3.4 |

Tabelle 2

| Polyamid/Copolyamid gemäß ISO 1874 | | VB1 | VB2 | VB3 | VB4 | VB5 | VB6 | VB7 | VB8 | VB9 |
|---|---|---|---|---|---|---|---|---|---|---|
| | | PA12 | MACM10 | MACM12 | MACM14 | MACM10/1010 (66:34) | MACM10/1010 (46:54) | MACM12/1012 (66:34) | MACM14/1014 (66:34) | MACM18/1018 (68:32) |
| Zusammensetzung | | | | | | | | | | |
| MACM | mol % | | 50 | 50 | 50 | 33 | 23 | 33 | 33 | 34 |
| 1,10-Decandiamin | mol % | | 0 | 0 | 0 | 17 | 27 | 17 | 17 | 16 |
| Sebacinsäure | mol % | | 50 | 0 | 0 | 50 | 50 | 0 | 0 | 0 |
| Dodecandisäure | mol % | | 0 | 50 | 0 | 0 | 0 | 50 | 0 | 0 |
| Tetradecandisäure | mol % | | 0 | 0 | 50 | 0 | 0 | 0 | 50 | 0 |
| Oktadecandisäure | mol % | | 0 | 0 | 0 | 0 | 0 | 0 | 0 | 50 |
| Laurinlactam | mol % | 100 | 0 | 0 | 0 | 0 | 0 | 0 | 0 | 0 |
| Bioanteil (ASTM D6866-06a) | % | 0 | 41,6 | 45,4 | 48,7 | 59,2 | 70,5 | 62,0 | 64,4 | 67,6 |
| Eigenschaften | | | | | | | | | | |
| Glasübergangstemperatur | °C | 25 | 164 | 153 | 145 | 116 | 89 | 110 | 103 | 90 |
| Schmelztemperatur | °C | 178 | n.m. | n.m. | n.m. | n.m. | n.m. | n.m. | n.m. | n.m. |
| Schmelzenthalpie | J/g | 55 | n.m. | n.m. | n.m. | n.m. | n.m. | n.m. | n.m. | n.m. |
| HDT B (konditioniert) | °C | 88 | 115 | 110 | n.b. | 90 | 58 | 90 | 83 | 68 |
| Relative Viskosität | | 1,90 | 1,70 | 1,84 | 1,87 | 1,62 | 1,84 | 1,76 | 1,77 | 1,74 |
| MVR 275°C/5kg | cm³/10min | 20 | 22 | 22 | 44 | 93 | 46 | 50 | 59 | 61 |
| Eigenschaften | | | VB2 | VB3 | VB4 | VB5 | VB6 | VB7 | VB8 | VB9 |
| Wasseraufnahme 23°C/50% rel. Feuchte | % | 0,7 | 1.2 | 1,1 | 0,7 | 1,1 | 1,0 | 0,9 | 0,8 | 0,7 |
| Zug-E-Modul trocken | MPa | 1575 | 1740 | 1500 | 1400 | 1695 | 1635 | 1570 | 1425 | 1250 |
| Zug-E-Modul konditioniert | MPa | 1140 | 1750 | 1520 | 1440 | 1715 | 1620 | 1530 | 1375 | 1210 |
| Streckspannung | MPa | 45 | 66 | 62 | 57 | 63 | 58 | 61 | 56 | 44 |
| Reissdehnung | %* | 200 | 100 | 120 | 160 | 180 | 120 | 180 | 180 | 200 |

| | | | VB2 | VB3 | VB4 | VB5 | VB6 | VB7 | VB8 | VB9 |
|---|---|---|---|---|---|---|---|---|---|---|
| Eigenschaften | | | | | | | | | | |
| Schlagzähigkeit Charpy 23°C | $kJ/m^2$ | o.B. | o.B. | o.B. | o.B. | o.B. | o.B. | o.B. | o.B. | o.B. |
| Kerbschlagzähigkeit Charpy 23°C | $kJ/m^2$ | 10,0 | 11,3 | 11,6 | 11,0 | 6,8 | 8,9 | 6,7 | 6,3 | 6.5 |
| Kerbschlagzähigkeit Charpv -30°C | $kJ/m^2$ | 7,0 | 9,8 | 11,9 | 12,4 | 5,0 | 11,9 | 9,6 | 11,3 | 12,1 |
| Haze (2 mm) | % | 100 | 1,4 | 0,4 | 0,9 | 2,3 | 1,0 | 7,2 | 6,4 | 1,6 |
| Lichttransmission (2 mm) | % | 0 | 93,4 | 93,5 | 93,9 | 93 | 93,8 | 93,4 | 93,3 | 92,5 |
| Gloss 20° | % | 0 | 148 | 150 | 150 | 148 | 152 | 140 | 136 | 146 |
| Haze (2mm) nach Lagerung | | | | | | | | | | |
| in Methanol | % | n.b. | n.b. | 49 | 1,6 | 99.3 | 12 | 18 | 8,3 | 1,6 |
| in Ethanol | % | n.b. | n.b | 94 | 87 | 100 | 36 | 97 | 98 | 1,7 |
| in Isopropanol | % | n.b. | n.b. | 5,5 | 10 | 101 | 19 | 100 | 96 | 2,3 |
| in Spiritus | % | n.b. | n.b. | 100 | 100 | 100 | 30 | 100 | 73 | 1,6 |

EP 2 291 457 B1

**Patentansprüche**

1. Polyamidformmassen auf Basis von teilkristallinen, aber gleichzeitig transparenten Copolyamiden, die überwiegend auf aliphatischen Monomeren basieren, zur Herstellung von transparenten oder einfärbbaren Formteilen mit hoher Flexibilität, hoher Kerbschlagzähigkeit (Charpy), niedriger Wasseraufnahme und ausgezeichneter Chemikalienbeständigkeit, enthaltend

    - 40 bis 100 Gew.-% mindestens eines teilkristallinen, transparenten Copolyamids (A) mit einer Glasübergangstemperatur ($T_g$) von höchstens 80°C und einer Schmelztemperatur von wenigstens 150°C, sowie einer Schmelzenthalpie von wenigstens 20 J/g, bevorzugt von wenigstens 30 J/g, wobei die Glasumwandlungstemperatur ($T_g$), der Schmelzpunkt ($T_m$) und die Schmelzwärme (HM) nach ISO 1 1357-1/2 bestimmt werden, und wobei die Differential scanning calorimetry (DSC) mit einer Aufheizrate von 20K/min durchgeführt wird, aufgebaut aus

    - mindestens zwei voneinander verschiedenen Diaminen, ausgewählt aus der Gruppe, bestehend aus linearen und/oder verzweigtkettigen aliphatischen Diaminen mit 9 bis 14 Kohlenstoffatomen und cycloaliphatischen Diaminen, insbesondere mit 6 bis 36 Kohlenstoffatomen, wobei die Konzentration an cycloaliphatischem Diamin 10 bis höchstens 40 Mol-% und die Konzentration an aliphatischem Diamin mindestens 60 Mol-%, jeweils bezogen auf den Gesamtdiamingehalt, beträgt, und wobei das cycloaliphatische Diamin ausgewählt ist aus der Gruppe, bestehend aus Bis-(4-amino-3-methyl-cyclohexyl)-methan (MACM), 2,2-Bis-(4-amino-3-methyl-cyclohexyl)-propan, Bis-(4-amino-3- ethyl-cyclohexyl)-methan (EACM), Bis-(4-amino-3,5-dimethylcyclohexyl)-methan (TMACM), Isophorondiamin (5-Amino-1,3,3-trimethyl-cyclohexanmethanamin), 1,3-Diaminocyclo-hexan, 1,3-Diaminomethylcyclohexan, 2,5- bzw. 2,6-Bis-(amino-methyl)-norbornan (DN), 2,5- bzw. 2,6-Diaminonorbornan, sowie
    - aus einer oder mehreren aliphatischen Dicarbonsäuren, insbesondere mit 6 bis 36 Kohlenstoffatomen,

    - 0 bis 60 Gew.-% mindestens eines weiteren Polymeren (B), ausgewählt aus der Gruppe, bestehend aus amorphen oder teilkristallinen Homo- oder Copolyamiden, Polyetheresteramiden, Polyetheramiden, Polyesteramiden oder deren Gemischen,
    - 0 bis 10 Gew.-% übliche Additive (C), ausgewählt aus der Gruppe, bestehend aus UV-Stabilisatoren, Hitzestabilisatoren, Radikalfängern und/oder Verarbeitungshilfsstoffen, Einschlussverhinderern, Gleitmitteln, Entformungshilfsstoffen, Weichmachern funktionellen Additiven zur Beeinflussung der optischen Eigenschaften, insbesondere des Brechungsindexes, Schlagzähmodifikatoren, nanoskaligen Füll- und/oder Zuschlagsstoffen, optischen Aufhellern, Farbstoffen oder Mischungen davon,

    wobei die Summe der Komponenten (A), (B) und (C) 100 Gew.-% ergibt.

2. Polyamidformmassen auf Basis von transparenten Copolyamiden gemäss Anspruch 1, **dadurch gekennzeichnet, dass** die Copolyamide überwiegend auf Monomeren basieren, die aus nachwachsenden oder erneuerbaren Rohstoffen zugänglich sind und wobei der Bioanteil nach ASTM D6866-068a von Copolyamid (A) und/oder der weiteren Komponente (B) mindestens 70 Gew.-%, bevorzugt mindestens 75 Gew.-% und insbesondere mindestens 80 Gew.-% beträgt.

3. Polyamidformmassen gemäss einem der Ansprüche 1 oder 2, **dadurch gekennzeichnet, dass** die Konzentration an cycloaliphatischem Diamin in der Komponente (A) 10 bis höchstens 35 Mol-% und bevorzugt von 10 bis höchstens 30 Mol-%, jeweils bezogen auf den Gesamtdiamingehalt, beträgt, und wobei ganz besonders bevorzugt die cycloaliphatischen Diamine in einem Konzentrationsbereich von 12 bis 30 Mol-%, bezogen auf den Gesamtdiamingehalt, eingesetzt werden.

4. Polyamidformmassen gemäss einem der Ansprüche 1 oder 2, **dadurch gekennzeichnet, dass** für das transparente Copolyamid (A) als aliphatische Diamin-Ausgangskomponenten Diamine ausgewählt werden aus der Gruppe bestehend aus Methyl-1,8-oktandiamin, 1,9-Nonandiamin, 1,10-Decandiamin, 1,11-Undecandiamin, 1,12-Dodecandiamin, 1,13-Tridecandiamin, oder 1,14-Tetradecandiamin.

5. Polyamidformmassen gemäss einem der Ansprüche 1 oder 2, **dadurch gekennzeichnet, dass** für das transparente Copolyamid (A) eine Mischung aus 10 bis 35 Mol-%, bevorzugt 12 bis 30 Mol-% Bis-(4-amino-3-methyl- cyclohexyl)-methan (MACM) und 65 bis 90 Mol-% aliphatischem Diamin mit 9 bis 14 Kohlenstoffatomen, insbesondere 1,10-Decandiamin, jeweils bezogen auf die Gesamtmenge an Diaminen, verwendet wird.

6. Polyamidforminassen gemäss einem der Ansprüche 1 oder 2, **dadurch gekennzeichnet, dass** die aliphatische Disäure ausgewählt ist aus der Gruppe, bestehend aus Azelainsäure, Sebacinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure und Gemischen davon.

7. Polyamidformmassen gemäss einem oder mehreren der Ansprüche 1 bis 6, **dadurch gekennzeichnet, dass** das Copolyamid (A) ausgewählt ist aus der Gruppe, bestehend aus MACM9/109, MACM10/1010, MACM11/1011, MACM12/1012, MACM13/1013, MACM14/1014, MACM15/1015, MACM16/1016, MACM17/1017, MACM18/1018, MACM9/119, MACM 10/1110, MACM11/1111, MACM12/1112, MACM13/1113, und MACM14/1114, MACM15/1115, MACM16/1116, MACM17/1117, MACM18/1118, MACM9/129, MACM 10/1210, MACM11/1211, MACM12/1212, MACM13/1213, und MACM14/1214, MACM15/1215, MACM16/1216, MACM17/1217 und MACM18/1218, wobei MACM10/1010, MACM 12/1012, MACM4/1014 und MACM18/1018 besonders bevorzugt sind.

8. Polyamidformmassen gemäss einem der vorhergehenden Ansprüche 1 bis 7, **dadurch gekennzeichnet, dass** die Polyamidformmasse ein Blend aus Copolyamid (A) mit einem zweiten Polymer (B) enthält und als Komponente (B) ein Polymer eingesetzt wird, das ein amorphes oder teilkristallines Polyamid oder Copolyamid ist, charakterisiert durch Ketten mit der nachstehenden Formel (II):

$$(MACMX)_x/(PACMY)_y/(MXDV)_v/LC_z \quad (II),$$

worin bedeuten:
X, Y, V = aliphatische Dicarbonsäure(n) mit 9 bis 18 und 36 Kohlenstoffatomen sowie Terephthalsäure (T) und Isophthalsäure (I), sowie Mischungen davon,
x = 0 - 100 Gew.-%,
y = 0 - 100 Gew.-%,
v = 0 - 100 Gew.-%,
LC = Lactam(e) und/oder Aminocarbonsäure(n) mit 6 bis 12 Kohlenstoffatomen,
z = 0 - 100 Gew.-%,
v + x + y + z = 100 Gew.-%.

9. Verfahren zur Herstellung der Polyamidformmassen gemäss einem der Ansprüche 1 bis 8, **dadurch gekennzeichnet, dass** die Herstellung der Polymerkomponenten (A) und (B) in bekannten Druckgefassen erfolgt, mit einer Druckphase bei 230°C bis 300°C mit einer nachfolgenden Entspannung bei 230°C bis 300°C, mit einer nachfolgenden Entgasung bei 240°C bis 300°C sowie Austragen der Polyamidformmassen in Strangform, Abkühlen, Granulieren und Trocknen des Granulats, Compoundieren der Komponenten (A), und gegebenenfalls (B), und gegebenenfalls (C) als Granulat und Formen in einem Extruder bei Massetemperaturen von 200°C bis 330°C zu einem Strang, Schneiden mit geeigneten Granulatoren zu Pellets, wobei während der Compoundierung Additive zugegeben werden können, die zur Ausrüstung der Formmasse erwünscht sind, ausgewählt aus der Gruppe der Verarbeitungsstabilisatoren, Farbpigmente, UV- Absorber, Hitzestabilisatoren, Flammschutzmittel und andere transparente Polyamide oder Polyamid 12.

10. Formteil, erhältlich aus den Polyamidformmassen gemäss einem der Ansprüche 1 bis 8 mittels Spritzgiessverfahren und Spritzprägeverfahren, Extrusionsverfabren, Blasformverfahren, Spritzstreckblasverfahren, Tiefziehverfahren und Schmelzespinnverfahren bei Massetemperaturen von 210°C bis 300°C, wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heisse Formteil aufbringt.

11. Formteil gemäss Anspruch 10, **gekennzeichnet durch** eine Lichttransmission, gemessen nach ASTM D1003, einer aus der Formmasse nach den Ansprüchen 1 bis 8 hergestellten Platte mit einer Dicke von 2mm, welche wenigstens 85%, bevorzugt wenigstens 88% und besonders bevorzugt wenigstens 90% beträgt.

12. Formteil gemäss einem der hervorgehenden Ansprüche 10 oder 11, **gekennzeichnet durch** eine Trübung (Haze), gemessen nach ASTM D1003, einer aus einer transparenten Polyamidformmasse nach den Ansprüchen 1 bis 8 hergestellten Platte mit einer Dicke von 2mm von höchstens 10%, bevorzugt von höchstens 5% und ganz besonders bevorzugt von höchstens 3%.

**13.** Formteil gemäss einem der vorhergehenden Ansprüche 10 oder 11, hergestellt aus einer Formmasse gemäss einem der Ansprüche 1 bis 11, **gekennzeichnet durch** eine Kerbschlagzähigkeit (Charpy, ISO 179/KeV), insbesondere bei tiefen Temperaturen unter dem Gefrierpunkt bei - 30 °C, mit einem Wert von deutlich über 10 kJ/m$^2$, bevorzugt über 14 kJ/m$^2$.

**14.** Formteil gemäss einem der vorhergehenden Ansprüche 10 oder 11, hergestellt aus einem der Formmasse gemäss einem der Ansprüche 1 bis 11 **gekennzeichnet durch** einem Zug-E-Modul (nach ISO 527) bei höchstens 1700 MPa, bevorzugt bei höchstens 1500 MPa, insbesondere bevorzugt höchstens 1300 MPa, wobei sich der Zug-E-Modul bei Wasseraufnahme (Konditionierung) im Wesentlichen nicht verändert.

**15.** Verwendung der Formteile gemäss den Ansprüchen 10 bis 14, hergestellt aus den erfindungsgemässen Formmassen gemäss den Ansprüchen 1 bis 8 für Sportgeräte, Sportschuhe, Sohlen für Sportschuhe, transparente flexible Schuhsohlen für Profi-Laufschuhe und andere Schuhe jeder Art, Skischuhe, Skibindungen, Sicherheitsausrüstungen, Schutzbrillen, Helme, Protektoren für Wintersport, Fahrradsport oder Motorradsport, Installationen, Schutzeinrichtungen, Halterungen oder Verscheibungen, insbesondere für Kühlräumen oder Kühlschränken, Sonnenlinsen, optische Linsen, Gehäuse- oder Displaymaterial für Mobiltelefone, GPS Geräte, MP3 Player, Brillen, Foto-Linsen, Kameragehäuse, optische Geräte, Ferngläser, transparente Rohre, Schläuche, Leitungen, Folien und Profile.

## Claims

**1.** A polyamide molding material based on partly crystalline but simultaneously transparent copolyamides based predominantly on aliphatic monomers for production of transparent or colorable moldings with high flexibility, high notched impact strength (Charpy), low water absorption and excellent chemical resistance, comprising

- 40 to 100% by weight of at least one partly crystalline, transparent copolyamide (A) with a glass transition temperature (Tg) of at most 80°C and a melting temperature of at least 150°C, and an enthalpy of fusion of at least 20 J/g, preferably of at least 30 J/g, where the glass transition temperature (Tg), the melting point ($T_m$) and the heat of fusion (HF) are determined to ISO 11357-1/2, and where the differential scanning calorimetry (DSC) is performed with a heating rate of 20 K/min,
formed from

- at least two different diamines selected from the group consisting of linear and/or branched-chain aliphatic diamines having 9 to 14 carbon atoms and cycloaliphatic diamines, especially having 6 to 36 carbon atoms, where the concentration of cycloaliphatic diamine is 10 to at most 40 mol% and the concentration of aliphatic diamine at least 60 mol%, based in each case on the total diamine content, wherein the cycloaliphatic diamine is selected from the group consisting of bis(4-amino-3-methylcyclohexyl)methane (MACM), 2,2-bis(4-amino-3-methylcyclohexyl)propane, bis(4-amino-3-ethylcyclohexyl)methane (EACM), bis(4-amino-3,5-dimethylcyclohexyl)methane (TMACM), isophoronediamine (5-amino-1,3,3-trimethylcyclohexanemethanamine), 1,3-diaminocyclohexane, 1,3-diaminomethylcyclohexane, 2,5- or 2,6-bis-(aminomethyl)norbornane (DN), 2,5- or 2,6-diaminonorbornane, and
- from one or more aliphatic dicarboxylic acids, especially having 6 to 36 carbon atoms,

- 0 to 60% by weight of at least one further polymer (B) selected from the group consisting of amorphous or partly crystalline homo- or copolyamides, polyether ester amides, polyether amides, polyester amides or mixtures thereof,
- 0 to 10% by weight of customary additives (C) selected from the group consisting of UV stabilizers, heat stabilizers, free-radical scavengers and/or processing aids, inclusion inhibitors, lubricants, mold release aids, plasticizers, functional additives for influencing optical properties, especially refractive index, impact modifiers, nanoscale fillers and/or additives, optical brighteners, dyes or mixtures thereof,

where the sum of components (A), (B) and (C) adds up to 100% by weight.

**2.** The polyamide molding material based on transparent copolyamides as claimed in claim 1, **characterized in that** the copolyamides are based predominantly on monomers obtainable from renewable raw materials, the biobased content to ASTM D6866-068a of copolyamide (A) and/or of the further component (B) being at least 70% by weight, preferably at least 75% by weight and especially at least 80% by weight.

**3.** The polyamide molding material as claimed in either of claims 1 and 2, **characterized in that** the concentration of cycloaliphatic diamine in component (A) is 10 to at most 35 mol% and preferably 10 to at most 30 mol%, based in each case on the total diamine content, the cycloaliphatic diamines most preferably being used within a concentration range from 12 to 30 mol%, based on the total diamine content.

**4.** The polyamide molding material as claimed in either of claims 1 and 2, **characterized in that** diamines as the aliphatic diamine starting components for the transparent copolyamide (A) are selected from the group consisting of methyl-1,8-octanediamine, 1,9-nonanediamine, 1,10-decanediamine, 1,11-undecanediamine, 1,12-dodecanediamine, 1,13-tridecanediamine, 1,14-tetradecanediamine,

**5.** The polyamide molding material as claimed in either of claims 1 and 2, **characterized in that** a mixture of 10 to 35 mol%, preferably 12 to 30 mol%, of bis(4-amino-3-methylcyclohexyl)methane (MACM) and/or bis(4-aminocyclohexyl)methane (PACM) and 65 to 90 mol% of aliphatic diamine having 9 to 14 carbon atoms, especially 1,10-decanediamine, based in each case on the total amount of diamines, is used for the transparent copolyamide (A).

**6.** The polyamide molding material as claimed in either of claims 1 and 2, **characterized in that** the aliphatic diacid is selected from the group consisting of azelaic acid, sebacic acid, undecanedioic acid, dodecanedioic acid, tridecanedioic acid, tetradecanedioic acid, pentadecanedioic acid, hexadecanedioic acid, heptadecanedioic acid, octadecanedioic acid, $C_{36}$ dimer fatty acid and mixtures thereof.

**7.** The polyamide molding material as claimed in one or more of claims 1 to 6, **characterized in that** the copolyamide (A) is selected from the group consisting of MACM9/109, MACM10/1010, MACM11/1011, MACM12/1012, MACM13/1013, MACM14/1014, MACM15/1015, MACM16/1016, MACM17/1017, MACM18/1018, MACM9/119, MACM10/1110, MACM11/1111, MACM12/1112, MACM13/1113 and MACM14/1114, MACM15/1115, MACM16/1116, MACM17/1117, MACM18/1118, MACM9/129, MACM10/1210, MACM11/1211, MACM12/1212, MACM13/1213, and MACM14/1214, MACM15/1215, MACM16/1216, MACM17/1217 and MACM18/1218, particular preference being given to MACM10/1010, MACM12/1012, MACM14/1014 and MACM18/1018.

**8.** The polyamide molding material as claimed in any of the preceding claims 1 to 10, **characterized in that** the polyamide molding material comprises a blend of copolyamide (A) with a second polymer (B), and the component (B) used is a polymer which is an amorphous or partly crystalline polyamide or copolyamide, **characterized by** chains with the following formula (II):

$$(MACMX)_x/(PACMY)_y/(MXDV)_v/LC_z \qquad (II)$$

in which:

X, Y, V = aliphatic dicarboxylic acid(s) having 9 to 18 and 36 carbon atoms and terephthalic acid (T) and isophthalic acid (I), and mixtures thereof,
x = 0-100% by weight, y = 0 - 100% by weight, v = 0 - 100% by weight,
LC = lactam(s) and/or aminocarboxylic acid(s) having 6 to 12 carbon atoms,
z = 0 - 100% by weight,
v + x + y + z = 100% by weight.

**9.** A process for producing the polyamide molding materials as claimed in any of claims 1 to 8, **characterized in that** the polymer components (A) and (B) are produced in known pressure vessels with a pressure phase at 230°C to 300°C with a subsequent decompression at 230°C to 300°C, with a subsequent devolatilization at 240°C to 300°C and discharge of the polyamide molding materials in strand form, cooling, granulating and drying the pellets, compounding components (A), and optionally (B), and optionally (C) in the form of pellets, and shaping in an extruder at melt temperatures of 200°C to 330°C to give a strand, cutting with suitable granulators to give pellets, it being possible during the compounding to add additives desired for modification of the molding material, such as processing stabilizers, color pigments, UV absorbers, heat stabilizers, flame retardants and other transparent polyamides or nylon-12.

**10.** A molding obtainable from the polyamide molding materials as claimed in any of claims 1 to 8 by means of injection molding processes and injection compression molding processes, extrusion processes, blow molding processes, injection stretch blow molding processes, thermoforming processes and melt spinning processes at melt temperatures of 210°C to 300°C, the mold being set to temperatures of 40°C to 130°C, and the mold at temperatures of 40°C to 130°C, after the cavity has been charged, optionally applying compression to the hot molding.

**11.** The molding as claimed in claim 10, **characterized by** a light transmittance measured to ASTM D1003 of a sheet produced from the molding material as claimed in claims 1 to 12 and having a thickness of 2 mm of at least 85%, preferably at least 88% and more preferably at least 90%.

**12.** The molding as claimed in either of the preceding claims 10 and 11, **characterized by** a haze measured to ASTM D1003 of a sheet produced from the transparent polyamide molding material as claimed in claims 1 to 11 and having a thickness of 2 mm of at most 10%, preferably of at most 5% and most preferably of at most 3%.

**13.** The molding as claimed in either of the preceding claims 10 and 11, produced from a molding material as claimed in any of claims 1 to 11, **characterized by** a notched impact strength (Charpy, ISO 179/KeV), especially at low temperatures below freezing point, with a value significantly above 10 kJ/m$^2$, preferably above 14 kJ/m$^2$, at -30°C.

**14.** The molding as claimed in either of the preceding claims 10 and 11, produced from one of the molding materials as claimed in any of claims 1 to 11, **characterized by** a tensile modulus of elasticity (to ISO 527) of not more than 1700 MPa, preferably not more than 1500 MPa, especially preferably not more than 1300 MPa, where the tensile modulus of elasticity is essentially unchanged on water absorption (conditioning).

**15.** The use of the moldings as claimed in claims 10 to 14, produced from the inventive molding materials as claimed in claims 1 to 8, for sports equipment, sports shoes, soles for sports shoes, transparent flexible shoe soles for professional running shoes and other shoes of any kind, ski boots, ski bindings, safety equipment, protective goggles, helmets, protectors for winter sports, competitive cycling or competitive motorcycling, installations, protective equipment, mounts or panels, especially for chill rooms or refrigerators, sun lenses, optical lenses, housing or display material for cellphones, GPS units, MP3 players, spectacles, photographic lenses, camera housings, optical instruments, binoculars, transparent tubes, pipes, wires, films and profiles.

**Revendications**

**1.** Masses de moulage en polyamide à base de copolyamides partiellement cristallins mais simultanément transparents, qui sont principalement à base de monomères aliphatiques, pour la préparation de pièces moulées transparentes ou monochromes présentant une souplesse élevée, une résilience élevée sur barreau entaillé (Charpy), une faible absorption d'eau et une résistance remarquable aux produits chimiques, contenant

- 40 à 100% en poids d'au moins un copolyamide (A) partiellement cristallin, transparent présentant une température de transition vitreuse (Tg) d'au plus 80°C et une température de fusion d'au moins 150°C ainsi qu'une enthalpie de fusion d'au moins 20 J/g, de préférence d'au moins 30 J/g, la température de transition vitreuse (Tg), le point de fusion (T$_m$) et l'enthalpie de fusion (HM) étant déterminés selon la norme ISO 1 1357-1/2, et la calorimétrie différentielle à balayage (Differential scanning calorimetry - DSC) étant réalisée à une vitesse de chauffage de 20 K/min, constitué par

- au moins deux diamines différentes l'une de l'autre, choisies dans le groupe constitué par les diamines aliphatiques linéaires et/ou ramifiées comprenant 9 à 14 atomes de carbone et les diamines cycloaliphatiques comprenant en particulier 6 à 36 atomes de carbone, la concentration en diamine cycloaliphatique étant de 10 à au plus 40% en mole et la concentration en diamine aliphatique étant d'au moins 60% en mole, à chaque fois par rapport à la teneur totale en diamines, et la diamine cycloaliphatique étant choisie dans le groupe constitué par le bis-(4-amino-3-méthylcyclohexyl)-méthane (MACM), le 2,2-bis-(4-amino-3-méthylcyclohexyl)-propane, le bis-(4-amino-3-éthylcyclohexyl)-méthane (EACM), le bis-(4-amino-3,5-diméthylcyclohexyl)-méthane (TMACM), l'isophoronediamine (5-amino-1,3,3-triméthylcyclohexaneméthanamine), le 1,3-diaminocyclohexane, le 1,3-diaminométhylcyclohexane, le 2,5-bis-(aminométhyl)-norbornane ou le 2,6-bis-(aminométhyl)-norbornane (DN), le 2,5-diaminonorbornane ou le 2,6-diaminonorbornane, ainsi que
- un ou plusieurs acides dicarboxyliques aliphatiques, comprenant en particulier 6 à 36 atomes de carbone,

- 0 à 60% en poids d'au moins un autre polymère (B), choisi dans le groupe constitué par les homopolyamides ou les copolyamides amorphes ou partiellement cristallins, les polyétheresteramides, les polyétheramides, les polyesteramides ou leurs mélanges,
- 0 à 10% en poids d'additifs usuels (C), choisis dans le groupe constitué par les stabilisants des UV, les stabilisants thermiques, les pièges de radicaux et/ou les adjuvants de transformation, les inhibiteurs d'inclusions, les lubrifiants, les adjuvants de démoulage, les plastifiants, les additifs fonctionnels pour influencer les propriétés optiques, en particulier l'indice de réfraction, les agents de modification de la résilience, les charges et/ou les agrégats nanométriques, les azurants optiques, les colorants ou les mélanges de ceux-ci,

la somme des composants (A), (B) et (C) valant 100% en poids.

2. Masses de moulage en polyamide à base de copolyamides transparents selon la revendication 1, **caractérisées en ce que** les copolyamides sont principalement à base de monomères qui sont accessibles à partir de matières premières qui repoussent ou renouvelables et la proportion biologique selon la norme ASTM D6866-068a de copolyamide (A) et/ou de l'autre composant (B) représentant au moins 70% en poids, de préférence au moins 75% en poids et en particulier au moins 80% en poids.

3. Masses de moulage en polyamide selon l'une quelconque des revendications 1 ou 2, **caractérisées en ce que** la concentration en diamine cycloaliphatique dans le composant (A) est de 10 à au plus 35% en mole et de préférence de 10 à au plus 30% en mole, à chaque fois par rapport à la teneur totale en diamines et, de manière tout particulièrement préférée, les diamines cycloaliphatiques étant utilisées dans une plage de concentration de 12 à 30% en mole, par rapport à la teneur totale en diamines.

4. Masses de moulage en polyamide selon l'une quelconque des revendications 1 ou 2, **caractérisées en ce que**, pour le copolyamide (A) transparent, comme composants diamine aliphatique de départ, on choisit des diamines du groupe constitué par la méthyl-1,8-octanediamine, la 1,9-nonanediamine, la 1,10-décanediamine, la 1,11-undécanediamine, la 1,12-dodécanediamine, la 1,13-tridécanediamine ou la 1,14-tétradécanediamine.

5. Masses de moulage en polyamide selon l'une quelconque des revendications 1 ou 2, **caractérisées en ce qu'**on utilise, pour le copolyamide (A) transparent, un mélange de 10 à 35% en mole, de préférence de 12 à 30% en mole de bis-(4-amino-3-méthylcyclohexyl)-méthane (MACM) et de 65 à 90% en mole de diamine aliphatique comprenant 9 à 14 atomes de carbone, en particulier la 1,10-décanediamine, à chaque fois par rapport à la quantité totale de diamines.

6. Masses de moulage en polyamide selon l'une quelconque des revendications 1 ou 2, **caractérisées en ce que** le diacide aliphatique est choisi dans le groupe constitué par l'acide azélaïque, l'acide sébacique, l'acide undécanedioïque, l'acide dodécanedioïque, l'acide tridécanedioïque, l'acide tétradécanedioïque, l'acide pentadécanedioïque, l'acide hexadécanedioïque, l'acide heptadécanedioïque, l'acide octadécanedioïque, l'acide gras dimère en C36 et leurs mélanges.

7. Masses de moulage en polyamide selon l'une ou plusieurs des revendications 1 à 6, **caractérisées en ce que** le copolyamide (A) est choisi dans le groupe constitué par le MACM9/109, le MACM10/1010, le MACM11/1011, le MACM12/1012, le MACM13/1013, le MACM14/1014, le MACM15/1015, le MACM16/1016, le MACM17/1017, le MACM18/1018, le MACM9/119, le MACM10/1110, le MACM11/1111, le MACM12/1112, le MACM13/1113, le MACM14/1114, le MACM15/1115, le MACM16/1116, le MACM17/1117, le MACM18/1118, le MACM9/129, le MACM10/1210, le MACM11/1211, le MACM12/1212, le MACM13/1213, le MACM14/1214, le MACM15/1215, le MACM16/1216, le MACM17/1217 et le MACM18/1218 ; le MACM10/1010, le MACM12/1012, le MACM14/1014 et le MACM18/1018 étant particulièrement préférés.

8. Masses de moulage en polyamide selon l'une quelconque des revendications précédentes 1 à 7, **caractérisées en ce que** la masse de moulage en polyamide contient un mélange de copolyamide (A) avec un deuxième polymère (B) et un polymère est utilisé comme composant (B), qui est un polyamide ou un copolyamide amorphe ou partiellement cristallin, **caractérisé par** des chaînes de la formule ci-dessous (II) :

$$(MACMX)_x / (PACMY)_y / (MXDV)_v / LC_z \ (II),$$

dans laquelle :

X, Y, V = un/des acide(s) dicarboxylique(s) aliphatique(s) comprenant 9 à 18 et 36 atomes de carbone ainsi que l'acide téréphtalique (T) et l'acide isophtalique (I), ainsi que leurs mélanges x = 0-100% en poids,

y = 0-100% en poids,

v = 0-100% en poids,

LC = un/des lactame(s) et/ou acide(s) aminocarboxylique(s) comprenant 6 à 12 atomes de carbone,

z = 0-100% en poids,

v + x + y + z = 100% en poids.

9. Procédé pour la préparation des masses de moulage en polyamide selon l'une quelconque des revendications 1 à 8, **caractérisé en ce que** la préparation des composants polymères (A) et (B) a lieu dans des récipients sous pression connus, par une phase sous pression à 230°C jusqu'à 300°C, une détente consécutive à 230°C jusqu'à 300°C, un dégazage consécutif à 240°C jusqu'à 300°C ainsi qu'une évacuation des masses de moulage en polyamide sous forme de brin, refroidissement, granulation et séchage du granulat, compoundage des composants (A) et le cas échéant (B) et le cas échéant (C) sous forme de granulat et moulage dans une extrudeuse à des températures de la masse de 200°C à 330°C en un brin, découpe avec des granulateurs appropriés en pellets, des additifs pouvant être ajoutés pendant le compoundage, qui sont souhaités pour l'apprêt de la masse de moulage, choisis dans le groupe formé par les stabilisants de transformation, les pigments colorés, les absorbants des UV, les stabilisants thermiques, les agents ignifuges et d'autres polyamides transparents ou le polyamide 12.

10. Pièce moulée, pouvant être obtenue à partir des masses de moulage en polyamide selon l'une quelconque des revendications 1 à 8 par des procédé de moulage par injection et des procédés d'estampage par injection, des procédés d'extrusion, des procédés de moulage par soufflage, des procédés d'étirage-soufflage par injection, des procédés d'emboutissage profond et des procédés de filage en masse fondue à des températures de la masse de 210°C à 300°C, l'outil étant réglé à des températures de 40°C à 130°C et l'outil, à des températures de 40°C à 130°C, appliquant le cas échéant, après le remplissage de la cavité, une pression d'estampage sur la pièce moulée chaude.

11. Pièce moulée selon la revendication 10, **caractérisée par** une transmission de la lumière, mesurée selon la norme ASTM D 1003, d'une plaque d'une épaisseur de 2 mm fabriquée à partir de la masse de moulage selon les revendications 1 à 8, qui est d'au moins 85%, de préférence d'au moins 88% et de manière particulièrement préférée d'au moins 90%.

12. Pièce moulée selon l'une quelconque des revendications précédentes 10 ou 11, **caractérisée par** un trouble (voile) mesuré selon la norme ASTM D1003, d'une plaque d'une épaisseur de 2 mm fabriquée à partir d'une masse de moulage en polyamide transparente selon les revendications 1 à 8, d'au plus 10%, de préférence d'au plus 5% et de manière tout particulièrement préférée d'au plus 3%.

13. Pièce moulée selon l'une quelconque des revendications 10 ou 11, fabriquée à partir d'une masse de moulage selon l'une quelconque des revendications 1 à 11, **caractérisée par** une résilience sur barreau entaillé (Charpy, ISO 179/KeV), en particulier à des températures basses inférieures au point de congélation à -30°C, d'une valeur nettement supérieure à 10 kJ/m$^2$, de préférence supérieure à 14 kJ/m$^2$.

14. Pièce moulée selon l'une quelconque des revendications précédentes 10 ou 11, fabriquée à partir d'une masse de moulage selon l'une quelconque des revendications 1 à 11, **caractérisée par** un module de traction E (selon la norme ISO 527) d'au plus 1700 MPa, de préférence d'au plus 1500 MPa, en particulier de préférence d'au plus 1300 MPa, le module de traction E n'étant essentiellement pas modifié lors d'une absorption d'eau (conditionnement).

15. Utilisation des pièces moulées selon les revendications 10 à 14, fabriquées à partir des masses de moulage selon l'invention selon les revendications 1 à 8 pour des appareils de sport, des chaussures de sport, des semelles pour chaussures de sport, des semelles souples, transparentes pour des chaussures de marche professionnelles et d'autres chaussures de tous types, des chaussures de ski, des fixations de ski, des équipements de sécurité, des lunettes de protection, des casques, des protections pour les sports d'hiver, le cyclisme ou le motocyclisme, des installations, des dispositifs de protection, des fixations ou des vitrages, en particulier pour des chambres froides ou des réfrigérateurs, des lentilles solaires, des lentilles optiques, du matériau pour les boîtiers ou l'affichage pour des téléphones mobiles, des appareils GPS, des lecteurs MP3, des lunettes, des lentilles pour appareil photo, des boîtiers de caméras, des appareils optiques, des jumelles ; des tuyaux, des flexibles, des conduites, des feuilles et des profilés transparents.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4310970
- EP 0012931 A2
- DE 4310970 A1
- WO 9840428 A
- EP 0725101 A

- DE 19642885 C2
- DE 3717928 C2
- EP 628602 B2
- EP 1847569 A1
- WO 2008006991 A2